(19) Europäisches Patentamt / European Patent Office / Office européen des brevets

(11) **EP 4 184 208 B1**

(12) **FASCICULE DE BREVET EUROPEEN**

(45) Date de publication et mention
de la délivrance du brevet:
**08.05.2024 Bulletin 2024/19**

(21) Numéro de dépôt: **22206675.5**

(22) Date de dépôt: **10.11.2022**

(51) Classification Internationale des Brevets (IPC):
**G01S 13/76** $^{(2006.01)}$ **G01S 19/48** $^{(2010.01)}$

(52) Classification Coopérative des Brevets (CPC):
**G01S 13/765; G01S 19/48**

(54) **PROCÉDÉ DE LOCALISATION D'UN VÉHICULE**

VERFAHREN ZUR LOKALISIERUNG EINES FAHRZEUGS

METHOD FOR LOCATING A VEHICLE

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **18.11.2021 FR 2112173**

(43) Date de publication de la demande:
**24.05.2023 Bulletin 2023/21**

(73) Titulaire: **Commissariat à l'énergie atomique
et aux énergies alternatives
75015 Paris (FR)**

(72) Inventeur: **VILLIEN, Christophe
38054 GRENOBLE CEDEX 09 (FR)**

(74) Mandataire: **INNOV-GROUP
310, avenue Berthelot
69372 Lyon Cedex 08 (FR)**

(56) Documents cités:
WO-A1-2020/063979 CN-A- 109 946 730
CN-A- 112 349 143 GB-A- 2 551 861

• NAVARRO MONICA ET AL: "Hybrid GNSS/INS/UWB Positioning for Live Demonstration Assisted Driving", 2019 IEEE INTELLIGENT TRANSPORTATION SYSTEMS CONFERENCE (ITSC), IEEE, 27 octobre 2019 (2019-10-27), pages 3294-3301, XP033668762, DOI: 10.1109/ITSC.2019.8917435
• SIDORENKO JURI ET AL: "Error Corrections for Ultrawideband Ranging", IEEE TRANSACTIONS ON INSTRUMENTATION AND MEASUREMENT, IEEE, USA, vol. 69, no. 11, 21 mai 2020 (2020-05-21), pages 9037-9047, XP011814173, ISSN: 0018-9456, DOI: 10.1109/TIM.2020.2996706 [extrait le 2020-10-08]

**Description**

L'invention concerne un procédé et un système de localisation d'un véhicule.

Il est connu d'utiliser, en plus des mesures d'une unité de mesure inertielle, des mesures de la distance entre un émetteur-récepteur mobile fixé sur le véhicule et un émetteur-récepteur fixe situé le long de la trajectoire du véhicule. Cela permet d'améliorer la précision de la localisation du véhicule. Un tel procédé de localisation est par exemple décrit dans les articles suivants :

- V. Di Pietra et al. : "Loosely Coupled GNSS and UWB with INS Intégration for Indoor/Outdoor Pedestrian Navigation", Sensors, 5/11/2020, et
- Monica N. et al. "Hybrid GNSS/INS/UWB Positioning for Live Demonstration Assisted Driving", 2019 IEEE Intelligent Transportation Systems Conférence (ITSC), Auckland, NZ, October 27-30, 2019,
- Navarro Monica et Al : « Hybrid GNSS/INS/UWB Positionning for Live Dermonstration Assisted Driving », 2019 IEEE Intelligent Transportation Systems Conférence, 27/10/2019, p3294-3301.

Plus précisément, dans ces procédés connus, la localisation du véhicule est corrigée en fonction d'un écart entre :

- une distance entre les émetteurs-récepteurs fixe et mobile mesurée à partir des instants d'émission ou de réception de signaux radio échangés entre les émetteurs-récepteurs fixe et mobile, et
- une estimation de cette distance construite à partir de la position estimée du véhicule à un instant $t_m$ et la position connue de l'émetteur-récepteur fixe,

De l'état de la technique est également connu de :

- CN112349143A,
- Sirorenko Juri et Al : « Error corrections for Ultrawidedbande ranging », IEEE Transaction on instrucmentation and measurement, vol. 69, n°11, 21/05/2019, p9037-9047,
- CN109946730A,
- GB2551861A,
- WO2020/063979A1.

L'invention vise à proposer un tel procédé de localisation d'un véhicule dans lequel la localisation du véhicule est plus précise.

Elle a donc pour objet un tel procédé de localisation d'un véhicule conforme à la revendication 1.

L'invention a également pour objet un support d'enregistrement d'informations qui comporte des instructions non-transitoires, exécutables par un calculateur électronique, pour l'exécution du procédé ci-dessus de localisation d'un véhicule.

Enfin, l'invention concerne également un système de localisation d'un véhicule conforme à la revendication 7.

L'invention sera mieux comprise à la lecture de la description qui va suivre, donnée uniquement à titre d'exemple non limitatif et faite en se référant aux dessins sur lesquels :

- la figure 1 est une illustration schématique d'un système de localisation d'un véhicule,
- la figure 2 est une illustration schématique de différents modules logiciels mis en oeuvre dans le système de la figure 1 ;
- la figure 3 est un organigramme d'un procédé de localisation d'un véhicule à l'aide du système de la figure 1 ;
- la figure 4 est un chronogramme montrant, sur différent axes des temps, les instants auxquels se produisent différents événements.

Dans ces figures, les mêmes références sont utilisées pour désigner les mêmes éléments.

Dans la suite de cette description, les caractéristiques et fonctions bien connues de l'homme du métier ne sont pas décrites en détail. En particulier, pour les connaissances générales de l'homme du métier concernant les systèmes de localisation d'un véhicule à l'aide d'une unité de navigation inertielle, il est renvoyé, par exemple, à la thèse suivante : S. Godha, "Performance Evaluation of Low Cost MEMS-Based IMU Integrated With GPS for Land Vehicle Navigation Application", PhD report, 2006. Par la suite, cette thèse est désignée par l'expression "Godha2006"..

Dans cette description, un exemple détaillé de mode de réalisation est d'abord décrit dans le chapitre I en référence aux figures. Ensuite, dans le chapitre II suivant, des variantes de ce mode de réalisation sont présentées. Enfin, les avantages des différents modes de réalisation sont présentés dans un chapitre III.

Chapitre 1 : Exemple de mode de réalisation

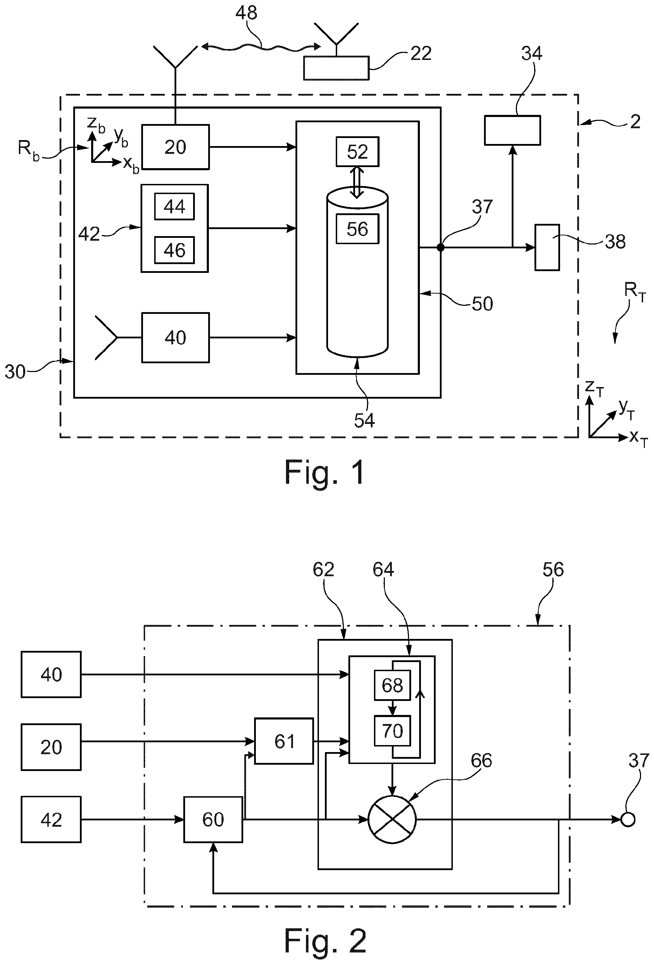

La figure 1 représente un véhicule 2 capable de se déplacer le long d'une trajectoire. Par exemple, dans cet exemple, le véhicule 2 est un véhicule automobile qui se déplace sur une route. Le véhicule 2 est ici équipé de moyens 34 de propulsion tel qu'un moteur qui entraîne des roues du véhicule 2.

Le véhicule 2 est équipé d'un système 30 de localisation de ce véhicule. Ce système 30 est apte à déterminer la position, l'orientation et la vitesse du véhicule 2 dans un repère terrestre $R_T$. Ici, le repère terrestre $R_T$ est fixé sans aucun degré de liberté à la terre. Le repère $R_T$ comporte trois axes typiquement orthogonaux entre eux. Par exemple, ici, le repère $R_T$ est le repère connu sous le terme de repère ECEF ("Earth Centered, Earth fixed").

Un repère mobile $R_b$ est également fixé sans aucun degré de liberté au véhicule 2. Ce repère $R_b$ comporte trois axes orthogonaux entre eux notés respectivement $x_b$, $y_b$ et $z_b$. Classiquement, lorsque le véhicule 2 se déplace horizontalement, les axes $x_b$ et $y_b$ sont dans un plan horizontal et l'axe $z_b$ est vertical. Ici, l'axe $x_b$ est orienté et pointe dans la direction vers laquelle se déplace le véhicule lorsque celui-ci se déplace en marche avant.

Ici, la position du véhicule 2 dans le repère $R_T$ est exprimée par des coordonnées de l'origine du repère $R_b$ dans le repère $R_T$.

L'orientation du véhicule 2 est exprimée par l'angle $\Psi$ de lacet (« yaw angle » en anglais), l'angle $\theta$ de tangage (« pitch angle » en anglais) et l'angle $\varphi$ de roulis (« roll angle » en anglais) du repère $R_b$ définis par rapport à un repère dit de "navigation". En pratique, le plus souvent, l'orientation du véhicule se présente sous la forme d'une matrice d'orientation à partir de laquelle il est possible de déduire l'angle de lacet, l'angle de tangage et l'angle de roulis du véhicule. L'orientation du véhicule peut aussi se présenter sous la forme d'un vecteur comportant directement l'angle de lacet, l'angle de tangage et l'angle de roulis du véhicule. Par la suite, on considère que ces deux cas de figures sont équivalents et donc que l'orientation du véhicule comporte l'angle de lacet, l'angle de tangage et l'angle de roulis du véhicule à partir du moment où ces trois angles peuvent être déduits directement d'une matrice ou d'un vecteur.

La position, l'orientation et la vitesse déterminées par le système 6 sont délivrées sur une sortie 37. Par la suite, la position, l'orientation et la vitesse délivrées sur la sortie 37 par le système 30 pour un instant $t_k$ sont notés, respectivement, P(k), O(k) et V(k).

Typiquement, le véhicule 2 comporte un poste 38 de pilotage pour guider ou assister au guidage du véhicule 2 vers une destination prédéfinie. Le poste 38 est raccordé à la sortie 37. Le poste 38 peut être un poste de pilotage manuel et/ou automatique. Dans le cas d'un poste de pilotage manuel, la position, l'orientation et la vitesse déterminées sont transmises à une interface homme-machine pour assister un être humain dans le pilotage des moyens 34 de propulsion. Dans le cas d'un poste de pilotage automatique, la position, l'orientation et la vitesse déterminées sont automatiquement converties en commandes de pilotage des moyens 34 de propulsion, puis transmises automatiquement à ces moyens 34 de propulsion.

Le système 30 comporte une unité 40 de géolocalisation par satellite et une unité 42 de mesure inertielle.

L'unité 40 est connue sous l'acronyme GNSS (« *Global Navigation Satellite System* ». A partir des signaux satellitaires qu'elle reçoit, l'unité 40 génère des signaux représentatifs de la position et de la vitesse du véhicule dans le repère $R_T$. L'unité 40 actualise ses mesures à une fréquence $F_{40}$. Classiquement, la fréquence $F_{40}$ est comprise entre 0,1 Hz et 20 Hz.

L'unité 42 est connue sous l'acronyme IMU (« *Inertial Measurement Unit* »). L'unité 42 comporte notamment un accéléromètre triaxe 44 et un gyromètre triaxe 46. Grâce à ces capteurs, l'unité 42 est capable de mesurer la variation de l'orientation, de la position et de la vitesse du véhicule 2. Ici, les axes de mesure de l'accéléromètre 44 et du gyromètre 46 sont confondus, respectivement, avec les axes $x_b$, $y_b$ et $z_b$ du repère $R_b$. De plus, l'accéléromètre 44 est agencé de manière à ce qu'une mesure positive de l'accélération du véhicule 2 le long de l'axe $x_b$ signifie que le véhicule 2 accélère en se déplaçant en marche avant.

L'unité 42 actualise les mesures de l'accélération et de la vitesse angulaire à une fréquence élevée $F_{42}$. Classiquement la fréquence $F_{42}$ est comprise entre 20 Hz et 2000 Hz. Par exemple, ici, la fréquence $F_{42}$ est égale à 200 Hz.

Pour localiser précisément le véhicule 2 le long de sa trajectoire, le système 30 comporte aussi un émetteur-récepteur radio 20 embarqué dans ce véhicule. Un ou plusieurs émetteurs-récepteurs fixes situés le long de la trajectoire du véhicule 2 sont également fournis. Par exemple, les émetteurs-récepteurs fixes sont disposés à intervalle régulier le long de la trajectoire du véhicule 2. Sur la figure 1, un seul émetteur-récepteur fixe 22 a été représenté.

Ce qui est décrit par la suite dans le cas particulier de cet émetteur-récepteur 22 s'applique à l'identique à tous les autres émetteurs-récepteurs fixes disposés le long de la trajectoire du véhicule 2.

L'émetteur-récepteur 22 est immobile et sa position dans le repère terrestre $R_T$ est connue à l'avance et ne change pas. Lorsque le véhicule 2 se trouve sur un segment de sa trajectoire à proximité de l'émetteur-récepteur 22, quelle que soit la position du véhicule 2 sur ce segment, les émetteurs-récepteurs 20, 22 sont capables d'échanger entre eux des trames d'informations permettant de mesurer la distance qui les sépare.

L'émetteur-récepteur 20 échange des trames d'informations avec l'émetteur-récepteur 22 par l'intermédiaire d'une liaison radio sans fil 48. Ces trames d'informations sont échangées notamment pour mesurer la distance qui sépare ces émetteurs-récepteurs 20, 22 à partir des temps de vol de ces trames d'informations. Pour cela, ici, les émetteurs-récepteurs 20, 22 sont des émetteurs-récepteurs ultra-large bande ou UWB ("Ultra Wide Band"). Le terme "émetteur-récepteur ultra-large bande" ou "émetteur-récepteur UWB" désigne ici un émetteur-récepteur qui utilise une large bande de fréquences pour envoyer et recevoir les trames d'informations. Un "large" bande de fréquences est une bande de fréquences dont la largeur est supérieure à $0,2f_c$, où $f_c$ est la fréquence médiane de cette bande de fréquences. Typiquement, une large bande de fréquences a une largeur supérieure à 250 MHz ou même supérieure à 400 MHz.

Chaque mesure d'une distance entre les émetteurs-récepteurs 20, 22 nécessite l'échange de plusieurs trames d'informations entre ces émetteurs-récepteurs 20, 22 et la mesure des instants d'émission et de réception de ces trames d'informations. Cet échange de trames d'informations est répété à une fréquence $F_{20}$ pour réactualiser à cette fréquence la mesure de la distance. La fréquence $F_{20}$ est plus petite que la fréquence $F_{42}$. Typiquement, la fréquence $F_{20}$ est dix ou cinquante fois plus petite que la fréquence $F_{42}$. Classiquement, la fréquence $F_{20}$ est comprise entre 0,1 Hz et 20 Hz. Ici, les instants d'émission et de réception des trames d'informations sont obtenus par l'émetteur-récepteur 20 logé dans le véhicule 2.

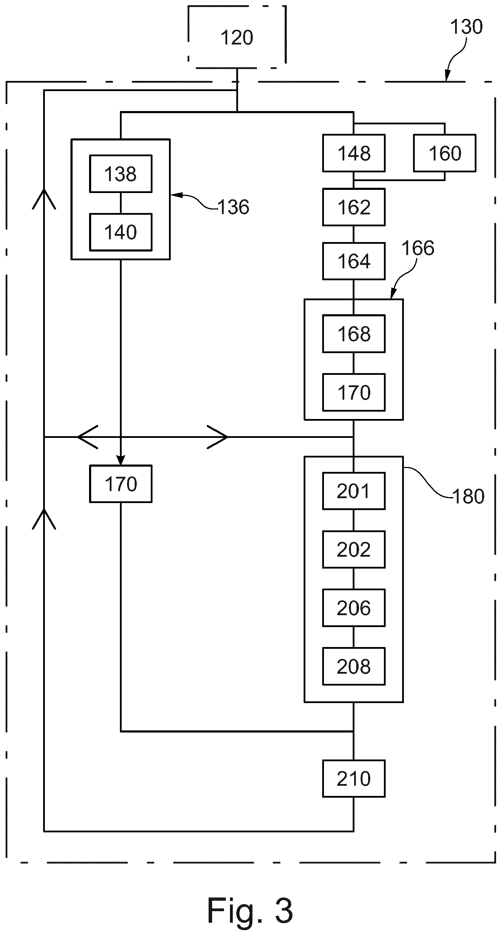

Pour déterminer la position, l'orientation et la vitesse du véhicule 2 à partir des mesures des unités 40 et 42 et des instants d'émission et de réception obtenus par l'émetteur-récepteur 20, le système 30 comporte un calculateur électronique programmable 50. Ce calculateur 50 est apte à acquérir les mesures des unités 40 et 42 et les instants d'émission et de réception obtenus par l'émetteur-récepteur 20. Ensuite, à partir de ces mesures, le calculateur 50 détermine la position, l'orientation et la vitesse du véhicule 2 dans le repère $R_T$. Le calculateur 50 comporte un microprocesseur 52 et une mémoire 54 comportant les instructions et les données nécessaires à la mise en oeuvre du procédé décrit en référence à la figure 3.

Plus précisément, la mémoire 54 comporte les instructions d'un module logiciel 56 apte à déterminer la position, l'orientation et la vitesse du véhicule 2 à partir des mesures acquises lorsqu'il est exécuté par le microprocesseur 52. Ici, le module 56 implémente notamment un algorithme de fusion qui établit, à partir d'une précédente estimation de la position, de l'orientation et de la vitesse du véhicule 2 et de nouvelles mesures acquises depuis cette précédente estimation, une nouvelle estimation de la position, de l'orientation et de la vitesse du véhicule 2. Typiquement, l'algorithme de fusion établit également des marges d'erreur sur chaque nouvelle estimation.

Les principes généraux des algorithmes de fusion sont bien connus de l'homme du métier. Par exemple, le lecteur intéressé peut encore une fois se référer à la thèse Godha2006 précédemment citée. Typiquement, cet algorithme de fusion implémente un ou plusieurs filtres de Kalman. Ici, le module 56 implémente une architecture connue sous le terme de "en boucle fermée" ("closed loop intégration scheme" ou "closed loop approach" en anglais).

La figure 3 représente plus en détail l'architecture du module 56. Le module 56 comporte :

- un sous-module 60 d'intégration de mesure inertielle,
- un sous-module 61 de calcul d'une distance corrigée entre les émetteurs-récepteurs 20, 22 à partir des instants d'émission et de réception obtenus par l'émetteur-récepteur 20, et
- un sous-module 62 de correction.

Les principes généraux de fonctionnement des sous-modules 60 et 62 sont connus. Par exemple, pour une description détaillée de ces principes généraux, le lecteur peut consulter le chapitre 4 de la thèse Godha2006. Ainsi, par la suite, seuls les détails spécifiques à l'invention sont décrits en détail.

Le sous-module 60 est connu sous le terme anglais de "Mechanization". Pour chaque instant $t_k$, le sous-module 60 construit une estimation brute d'une position $P_e(k)$, d'une orientation $O_e(k)$ et d'une vitesse $V_e(k)$ du véhicule 2. Dans ce texte, le symbole "k" est le numéro d'ordre de l'instant $t_k$ dans la suite $\{0, t_1, t_2, ..., t_{k-1}, t_k, ...\}$ ordonnée temporellement des instants $t_k$. On note k-1 le numéro d'ordre de l'instant $t_{k-1}$ qui précède immédiatement l'instant $t_k$. Les position $P_e(k)$, orientation $O_e(k)$ et vitesse $V_e(k)$ du véhicule 2 sont chacune un vecteur comportant trois coordonnées. Les coordonnées de la position $P_e(k)$ dans le repère $R_T$ sont notées $x_e(k)$, $y_e(k)$ et $z_e(k)$. Les coordonnées de l'orientation $O_e(k)$ sont notées $\Psi_e(k)$, $\theta_e(k)$ et $\varphi_e(k)$ et les coordonnées de la vitesse $V_e(k)$ sont notées $Vx_e(k)$, $Vy_e(k)$ et $Vz_e(k)$.

La fréquence des instants $t_k$ est inférieure ou égale à la fréquence $F_{42}$. Ici, la fréquence des instants $t_k$ est égale à la fréquence $F_{42}$.

Le sous-module 60 construit la position $P_e(k)$, l'orientation $O_e(k)$ et la vitesse $V_e(k)$ à partir :

- de la précédente position P(k-1), de la précédente orientation O(k-1) et de la précédente vitesse V(k-1) déterminées pour le véhicule 2 à l'instant $t_{k-1}$ par le système 30 et délivrées sur la sortie 37, et
- des mesures de l'accéléromètre 44 et du gyromètre 46 acquises par le sous-module 60 à l'instant $t_k$.

La combinaison du sous-module 60 et de l'unité 42 forme ce qui est connu sous l'acronyme INS (« Inertial Navigation System »).

Le sous-module 61 acquière les instants d'émission et de réception obtenus par l'émetteur-récepteur 20 et la dernière position du véhicule 2 estimée par le sous-module 60. Ensuite, le sous-module 61 délivre au sous-module 62 une distance corrigée calculée à partir des instants d'émission et de réception acquis et de la dernière position du véhicule 2 acquise. Le fonctionnement détaillé de ce sous-module 61 est décrit en référence à la figure 3.

A certains instants $t_k$ particuliers, le sous-module 62 corrige la position $P_e(k)$, l'orientation $O_e(k)$ et la vitesse $V_e(k)$ construites par le sous-module 60 pour cet instant $t_k$ afin d'obtenir une position corrigée $P_c(k)$, une orientation corrigée $O_c(k)$ et une vitesse corrigée $V_c(k)$ pour cet instant $t_k$. Par la suite, ces instants $t_k$ particuliers sont appelés "instants $t_m$". Le symbole "m" est égal au numéro d'ordre de d'un instant $t_k$ particulier dans la suite $\{0, t_1, t_2, ..., t_{k-1}, t_k, ...\}$. Chaque numéro d'ordre m est donc égal à un numéro d'ordre k respectif. Ainsi, la position $P_e(m)$, l'orientation $O_e(m)$ et la vitesse $V_e(m)$ sont égales, respectivement, à la position $P_e(k)$, l'orientation $O_e(k)$ et la vitesse $V_e(k)$ construites pour l'instant $t_k$ égal à l'instant $t_m$. La suite $\{0, t_1, t_2, ..., t_{m-1}, t_m, ...\}$ des instants $t_m$ est un sous-ensemble de la suite $\{0, t_1, t_2, ..., t_{k-1}, t_k, ...\}$. Ainsi, la correction par le sous-module 62 n'est pas réalisée pour chaque instant $t_k$ mais seulement pour une partie d'entre eux. A chaque instant $t_m$, le sous-module 62 combine la position $P_e(m)$, l'orientation $O_e(m)$ et la vitesse $V_e(m)$ avec des coefficients de correction respectifs pour obtenir la position corrigée $P_c(m)$, l'orientation corrigée $O_c(m)$ et la vitesse corrigée $V_c(m)$. Aux instants $t_m$, c'est la position corrigée $P_c(m)$, l'orientation corrigée $O_c(m)$ et la vitesse corrigée $V_e(m)$ qui sont délivrés sur la sortie 37 et non pas la position $P_e(m)$, l'orientation $O_e(m)$ et la vitesse $V_e(m)$. Les coefficients de correction sont mis à jour en fonction des mesures de l'unité 40 et de la distance corrigée déterminée par le sous-module 61. Les coefficients de corrections sont donc mis à jour à une fréquence inférieure à la fréquence $F_{42}$.

Le sous-module 62 acquière les mesures de l'unité 40 à une fréquence inférieure ou égale à la fréquence $F_{42}$. Ici, la fréquence d'acquisition des mesures de l'unité 40 est égale à la fréquence $F_{40}$. Par la suite, on note $tg_i$ les instants d'acquisition d'une nouvelle mesure de l'unité 40. Ces instants $tg_i$ forment une suite $\{0, tg_1, tg_2, ..., tg_{i-1}, tg_i, ...\}$ ordonnée temporellement d'instants $tg_i$. Le symbole "i" désigne le numéro d'ordre de l'instant $tg_i$ dans cette suite. Le sous-module 62 met à jour les coefficients de correction à chaque fois qu'une nouvelle mesure de l'unité 40 est acquise et donc pour chaque instant $tg_i$. Les instants $tg_i$ sont moins fréquents que les instants $t_k$.

Le sous-module 62 acquière aussi la distance corrigée, délivrée par le sous-module 61, à une fréquence inférieure ou égale à la fréquence $F_{42}$. Ici, la fréquence d'acquisition de la distance corrigée est égale à la fréquence $F_{20}$. Par la suite, on note $to_j$ les instants d'acquisition de chaque nouvelle distance corrigée. On note également $dc_j$ la distance corrigée acquise à l'instant $to_j$. Le symbole "j" est le numéro d'ordre de l'instant $to_j$ dans la suite $\{0, to_1, to_2, ..., to_{j-1}, to_j, ...\}$ ordonnée temporellement des instants $to_j$. Le sous-module 62 met aussi à jour les coefficients de correction à chaque fois qu'une nouvelle distance corrigée $dc_j$ est acquise et donc pour chaque instant $to_j$. Puisque la fréquence $F_{20}$ est inférieure à la fréquence $F_{42}$, il existe systématiquement plusieurs instants $t_k$ entre les instants $to_{j-1}$ et $to_j$.

Par la suite, on considère que les suites $\{0, tg_1, tg_2, ..., tg_{i-1}, tg_i, ...\}$ et $\{0, to_1, to_2, ..., to_{j-1}, to_j, ...\}$ sont toutes les deux des sous-ensembles de la suite $\{0, t_1, t_2, ..., t_{k-1}, t_k, ...\}$. Ainsi, chaque instants $tg_i$ et $to_j$ correspond à un instant $t_k$ respectif de la suite $\{0, t_1, t_2, ..., t_{k-1}, t_k, ...\}$. De plus, dans ce mode de réalisation, les instants $tg_i$ et $to_j$ sont distincts. Autrement dit, à un instant $tg_i$ où la mesure de l'unité 40 est acquise, aucune nouvelle distance corrigée n'est acquise et vice-versa. Enfin, dans ce texte, les instants $t_m$ sont égaux aux instants auxquels le sous-module 62 acquière soit une mesure de l'unité 40 soit une nouvelle distance corrigée.

Pour mettre à jour les coefficients de corrections en fonction des mesures de l'unité 40 et de la distance corrigée, le sous-module 62 comporte un filtre de Kalman 64. Pour combiner les coefficients de corrections aux estimations brutes délivrées par le sous-module 60, le sous-module 62 comporte aussi un additionneur 66.

Ici, le filtre 64 est connu sous l'acronyme ESKF (Error State Kalman Filter) car il estime des corrections à apporter à la position, l'orientation et la vitesse estimées par le sous-module 60. Plus précisément, le filtre 64 fournit, pour chaque instant $t_m$, un vecteur d'état $X_{m|m}$. Le vecteur d'état $X_{m|m}$ contient notamment les coefficients de correction à utiliser pour corriger la position $P_e(m)$, l'orientation $O_e(m)$ et la vitesse $V_e(m)$. Pour chaque instant $t_m$, l'additionneur 66 combine les coefficients de correction fournis par le filtre 64 avec la position $P_e(m)$, l'orientation $O_e(m)$ et la vitesse $V_e(m)$ pour obtenir la position corrigée $P_c(m)$, l'orientation corrigée $O_c(m)$ et la vitesse corrigée $V_c(m)$. Pour chaque instant $t_k$ postérieur à l'instant $t_m$ et antérieur à l'instant $t_{m+1}$, aucune correction n'est apportée aux estimations construites par le sous-module 60.

Par exemple, ici, le vecteur d'état $X_{m|m}$ contient des coefficients de correction $\delta_x(m)$, $\delta_y(m)$ et $\delta_z(m)$ des coordonnées, respectivement, $x_e(m)$, $y_e(m)$ et $z_e(m)$ de la position $P_e(m)$. L'additionneur 66 ajoute ces coefficients $\delta_x(m)$, $\delta_y(m)$ et $\delta_z(m)$, respectivement, aux coordonnées $x_e(m)$, $y_e(m)$ et $z_e(m)$ pour obtenir les coordonnées, respectivement, $x_e(m)$, $y_c(m)$ et $z_e(m)$ de la position corrigée $P_c(m)$.

Le vecteur d'état $X_{m|m}$ comporte aussi des coefficients de correction $\delta_\psi(m)$, $\delta_\theta(m)$ et $\delta_\varphi(m)$, respectivement, des coordonnées $\Psi_e(m)$, $\theta_e(m)$ et $\varphi_e(m)$ de l'orientation $O_e(m)$. L'additionneur 66 ajoute ces coefficients $\delta_\psi(m)$, $\delta_\theta(m)$ et $\delta_\varphi(m)$, respectivement, aux coordonnées $\Psi_e(m)$, $\theta_e(m)$ et $\varphi_e(m)$ pour obtenir les coordonnées corrigées, respectivement, $\psi_c(m)$, $\theta_c(m)$ et $\varphi_c(m)$ de l'orientation $O_c(m)$.

De façon similaire, le vecteur d'état $X_{m|m}$ comporte aussi trois coefficients de correction $\delta v_x(m)$, $\delta v_y(m)$ et $\delta v_z(m)$ utilisés pour corriger, respectivement, les coordonnées $Vx_e(m)$, $Vy_e(m)$ et $Vz_e(m)$ de la vitesse $V_e(m)$.

Classiquement, le vecteur d'état $X_{m|m}$ comporte aussi des coefficients de correction pour corriger d'autres paramètres comme des biais de mesure de l'accéléromètre 44 et du gyromètre 46 ou autres. Dans ce mode de réalisation, le vecteur d'état $X_{m|m}$ contient en plus :

- trois coefficients de correction $\delta ba_x(m)$, $\delta ba_y(m)$ et $\delta ba_z(m)$ pour corriger les biais de mesure de l'accéléromètre 44 dans les directions, respectivement, $x_b$, $y_b$ et $z_b$,
- trois coefficients de correction $\delta bg_x(m)$, $\delta bg_y(m)$ et $\delta bg_z(m)$ pour corriger les biais de mesure du gyromètre 46 autour des axes parallèles, respectivement, aux directions $x_b$, $y_b$ et $z_b$.

Dans ce mode de réalisation, le vecteur d'état $X_{m|m}$ est donc le vecteur suivant à quinze coordonnées : $[\delta_\psi(m),$ $\delta_\theta(m), \delta_\varphi(m), \delta v_x(m), \delta v_y(m), \delta v_z(m), \delta_x(m), \delta_y(m), \delta_z(m), \delta ba_x(m), \delta ba_y(m), \delta ba_z(m), \delta bg_x(m), \delta bg_y(m), \delta bg_z(m)]^T$, où le symbole "$^T$" est le symbole de l'opération transposée.

Le filtre 64 est un algorithme récursif qui, pour chaque instant $t_m$, fournit à l'additionneur 66 un nouveau vecteur d'état $X_{m|m}$ calculé à partir :

- du précédent vecteur d'état $X_{m-1|m}$-1,
- de la mesure de l'unité 40 ou de la nouvelle distance corrigée acquise à l'instant $t_m$, et
- de la position $P_e(m)$, de l'orientation $O_e(m)$ et de la vitesse $V_e(m)$ construites par le sous-module 60 pour l'instant $t_m$.

Classiquement, le filtre 64 comporte un bloc 68 de prédiction calculant un premier vecteur d'état $X_{m|m-1}$ à partir du vecteur $X_{m-1|m-1}$ suivi d'un bloc 70 de mise à jour calculant le vecteur $X_{m|m}$ à partir du vecteur $X_{m|m-1}$ prédit. Ces blocs sont exécutés l'un après l'autre pour chaque vecteur $X_{m|m}$.

Plus précisément, le bloc 68 construit une prédiction $X_{m|m-1}$ du vecteur d'état à partir du précédent vecteur d'état $X_{m-1|m-1}$.

Ici, un exemple de mode de réalisation des blocs 68 et 70 est décrit dans le cas particulier où le filtre 64 est un filtre de Kalman étendue connue sous l'acronyme EKF ("Extended Kalman Filter").

L'équation de propagation ou de prédiction de l'état du filtre 64 mise en oeuvre par le bloc 68 est définie par la relation (1) suivante :

$$X_{m|m-1} = A_{m-1}X_{m-1|m-1}$$

où :

- $X_{m-1|m-1}$ est l'estimation du vecteur d'état à l'instant $t_{m-1}$ obtenue en prenant en compte toutes les mesures jusqu'à l'instant $t_{m-1}$,
- $X_{m|m-1}$ est la prédiction du vecteur d'état à l'instant $t_m$ obtenue en prenant en compte toutes les mesures jusqu'à l'instant $t_{m-1}$ et sans prendre en compte les mesures acquises à l'instant $t_m$,
- $A_{m-1}$ est la matrice de transition d'états à l'instant $t_{m-1}$.

Dans le cas particulier décrit ici où le filtre 64 est un "Error State Kalman Filter", le vecteur $X_{m-1|m-1}$ est toujours nul car on suppose que l'erreur avait été corrigée précédemment. Autrement dit, la relation (1) est ramenée à la relation suivante : $X_{m|m-1} = 0$.

L'équation de propagation ou de prédiction de la matrice de covariance de l'erreur mise en oeuvre par le bloc 68 est définie par la relation (2) suivante :

$$P_{m|m-1} = A_{m-1}P_{m-1|m-1}A_{m-1}^T + Q_{m-1}$$

où :

- $P_{m-1|m-1}$ est l'estimation de la matrice de covariance de l'erreur à l'instant $t_{m-1}$ obtenue en prenant en compte toutes les mesures acquises jusqu'à l'instant $t_{m-1}$,
- $P_{m|m-1}$ est la prédiction de la matrice de covariance $P_m$ à l'instant $t_m$ obtenue en prenant seulement en compte les mesures acquises jusqu'à l'instant $t_{m-1}$,
- $Q_{m-1}$ est la matrice de covariance du bruit de processus v.

Le bloc 70 corrige la prédiction $X_{m|m-1}$ du vecteur d'état de manière à obtenir le vecteur d'état $X_{m|m}$. Le vecteur

$X_{m|m}$ corrigé est construit en fonction d'un écart $Y_m$ entre :

- une estimation $\hat{z}_m$ d'une grandeur physique à l'instant $t_m$, et
- la mesure $z_m$ de cette même grandeur physique à l'instant $t_m$.

L'écart $Y_m$ est connu sous le nom de "innovation". Ici, les grandeurs physiques mesurées sont la position et la vitesse mesurées par l'unité 40 et, en alternance, la distance corrigée délivrée par le sous-module 61. Ainsi, pour chaque instant $tg_i$, le bloc 70 corrige la prédiction $X_{m|m-1}$ uniquement à partir de la mesure de l'unité 40 acquise à cet instant $tg_i$. Réciproquement, pour chaque instant $to_j$, le bloc 70 corrige la prédiction $X_{m|m-1}$ uniquement à partir de la distance corrigée acquise à cet instant $to_j$. La correction de la prédiction $X_{m|m-1}$, aux instants $tg_i$, en fonction des écarts de position et de vitesse est réalisée, par exemple, comme décrit dans Godha2006. Ainsi, cette fonctionnalité du bloc 70 n'est pas décrite plus en détail. Seule la correction de la prédiction $X_{m|m-1}$, aux instants $to_j$, en fonction de la distance corrigée est décrite ci-dessous.

Dans cet exemple de réalisation, la grandeur physique est la distance corrigée $dc_m$. L'estimation $\hat{z}_m$ de la distance corrigée $dc_m$ est construite à l'aide de la relation (3) suivante :

$$\hat{z}_m = \sqrt{\left(x_e(m) - B_x\right)^2 + \left(y_e(m) - B_y\right)^2 + \left(z_e(m) - B_z\right)^2}$$

où :

- $m$ est le numéro d'ordre d'un instant $t_m$ de la suite $\{0, t_1, t_2, ..., t_{m-1}, t_m, ...\}$ où une nouvelle distance corrigée est acquise,
- $x_e(m)$, $y_e(m)$ et $z_e(m)$ sont les coordonnées de la position $P_e(m)$ estimée par le sous-module 60 et exprimées dans le repère $R_T$,
- $B_x$, $B_y$, $B_z$ sont les coordonnées de la position de l'émetteur-récepteur 22 dans le repère $R_T$.

Les coordonnées $B_x$, $B_y$, $B_z$ sont constantes et pré-enregistrées dans la mémoire 54.
L'innovation $Y_m$ est obtenue à l'aide de la relation (4) suivante : $Y_m = dc_m - \hat{z}_m$.
Typiquement, le bloc 70 corrige la prédiction $X_{m|m-1}$ en y ajoutant l'innovation $Y_m$ multipliée par le gain $K_m$ de Kalman. Le gain $K_m$ est calculé à l'aide de la relation (5) suivante : $K_m = P_{m|m-1}H_m^T (H_m P_{m|m-1} H_m^T + R_m)^{-1}$, où :

- la matrice $R_m$ est la matrice de covariance du bruit sur la distance corrigée, et
- $H_m$ est une matrice d'observation.

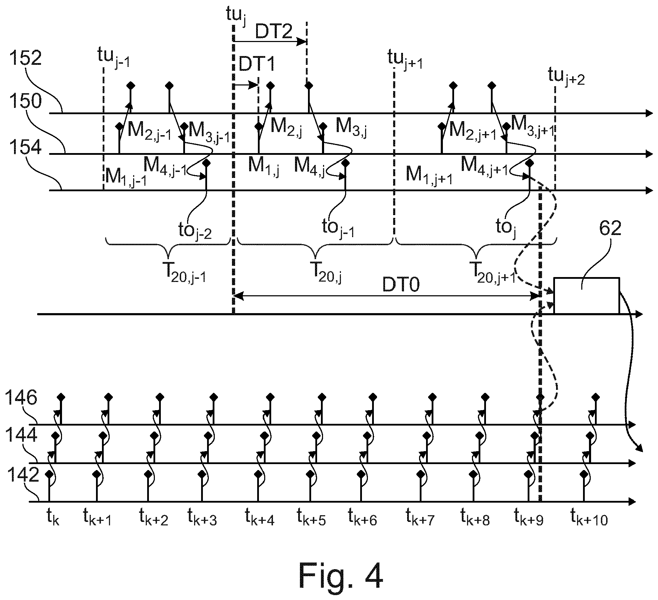

La matrice d'observation $H_m$ est fonction de la dérivée partielle de la relation (3) par rapport aux différents paramètres du vecteur d'état $X_{m|m}$. La matrice $R_m$ est par exemple constante et initialisée à l'aide de données sur la covariance du bruit sur les mesures des instants d'émission et de réception obtenus par l'émetteur-récepteur 20.
Ensuite, le vecteur d'état $X_{m|m}$ est obtenu à l'aide de la relation (6) suivante : $X_{m|m} = X_{m|m-1} + K_m Y_m$.
La matrice mise à jour de covariance de l'erreur à l'instant $t_m$ est calculée à l'aide de la relation (7) suivante : $P_{m|m} = (I - K_m H_m)P_{m|m-1}$, où I est la matrice identité.
La matrice $P_{m|m}$ contient les marges d'erreur sur les estimations des coefficients de corrections.
Dans ce mode de réalisation particulier, l'additionneur 66 est un simple additionneur qui ajoute à la position $P_e(k)$, à l'orientation $O_e(k)$ et à la vitesse $V_e(k)$ les coefficients de corrections correspondant contenus dans le vecteur d'état $X_{m|m}$. Ensuite, l'additionneur 66 délivre sur la sortie 37 la position $P_c(k)$, l'orientation $O_c(k)$ et la vitesse $V_e(k)$ corrigées ainsi obtenues.
Le fonctionnement du système 30 va maintenant être décrit en référence au procédé de la figure 3 et à l'aide du chronogramme de la figure 4.
L'utilisation du système 30 pour localiser le véhicule 2 débute par une phase 120 d'initialisation du système 30. Cette phase 120 débute immédiatement après l'activation du système 30, c'est-à-dire typiquement juste après qu'il ait été mis sous tension. Lors de cette phase 120 les différentes variables et paramètres nécessaires à l'exécution du module 56 sont initialisées. Par exemple, les valeurs initiales de la position, de la vitesse et de l'orientation du véhicule 2 et des coefficients de correction sont initialisées. Il existe de nombreux algorithmes qui permettent d'obtenir rapidement ces valeurs initiales.
Une fois la phase 120 d'initialisation terminée, une phase 130 d'exécution du module 56 débute.
Lors d'une étape 136, à chaque fois que des nouvelles mesures de l'unité 42 sont acquises par le calculateur 50, le module 56 détermine et actualise la position, l'orientation et la vitesse du véhicule 2. Ainsi, cette actualisation est réalisée pour chaque instant $t_k$.

Plus précisément, l'étape 136 comporte une opération 138 lors de laquelle l'accéléromètre 44 et le gyromètre 46 mesurent, respectivement, l'accélération et la vitesse angulaire du véhicule 2 et ces nouvelles mesures sont acquises par le calculateur 50 à l'instant $t_k$.

Ensuite, lors d'une opération 140, le sous-module 60 construit les estimations brutes $P_e(k)$, $O_e(k)$ et $V_e(k)$ à partir :

- de la précédente position $P(k-1)$, de la précédente orientation $O(k-1)$ et de la précédente vitesse $V(k-1)$, et
- des mesures de l'accéléromètre 44 et du gyromètre 46 acquises à l'instant $t_k$.

La partie basse de la figure 4, comporte un axe temporel 142 le long duquel sont représentés les instants $t_k$ à $t_{k+10}$ auxquels l'unité 42 mesure l'accélération et la vitesse angulaire. L'axe temporel 144 représente les instants auxquels, le sous-module 60 acquière l'accélération et la vitesse angulaire mesurées par l'unité 42. Une flèche en pointillée relie chaque instant $t_k$ où une mesure est réalisée par l'unité 42 à l'instant auquel le sous-module 60 acquière cette mesure. L'axe temporel 146 représente les instants auxquels le sous-module 60 délivre les estimations $P_e(k)$, $O_e(k)$ et $V_e(k)$. Une flèche en pointillée relie chaque instant où une mesure est acquise par le sous-module 60 à l'instant auquel ce sous-module 60 délivre les estimations $P_e(k)$, $O_e(k)$ et $V_e(k)$ obtenues à partir de cette mesure acquise.

En parallèle de l'étape 136, lors d'une étape 148, les émetteurs-récepteurs 20 et 22 échangent des trames d'informations pour permettre la mesure d'une distance brute entre ces émetteurs-récepteurs 20, 22 à partir des instants d'émission et de réception de ces trames d'informations. Chaque échange de trames d'informations permet d'acquérir suffisamment d'instants d'émission et de réception pour calculer une distance brute entre ces émetteurs-récepteurs 20 et 22. Ici, ces échanges sont déclenchés périodiquement à la fréquence $F_{20}$. Chaque échange se déroule donc au cours d'une période $T_{20,j}$ respective égale à $1/F_{20}$. Chacune des périodes $T_{20,j}$ débute à un instant $tu_j$ respectif d'une suite $\{0, tu_1, tu_2, ..., tu_{j-1}, tu_j, ...\}$ ordonnée temporellement des instants $tu_j$. L'écart entre les instants $tu_{j+1}$ et $tu_j$ est égal à la durée de la période $T_{20,j}$.

Dans cet exemple de réalisation, c'est la méthode de mesure de distance aller-retour qui est implémentée. Cette méthode de mesure de distance est plus connue sous le terme anglais de « two-way ranging ». Selon cette méthode, chaque échange comporte :

- l'émission par l'émetteur-récepteur 20 d'une première trame d'informations, puis
- en réponse à la réception de cette première trame d'informations par l'émetteur-récepteur 22, l'émission par l'émetteur-récepteur 22 d'une seconde trame d'informations.

La première trame d'informations est émise à un instant $M_{1,j}$ et reçue par l'émetteur-récepteur 22 à un instant $M_{2,j}$. La seconde trame d'informations est émise à un instant $M_{3,j}$ et reçue par l'émetteur-récepteur 20 à un instant $M_{4,j}$. L'instant $M_{1,j}$ n'est pas nécessairement confondu avec l'instant $tu_j$. La durée entre les instants $tu_j$ et $M_{1,j}$ est ici appelée durée DT1. L'instant $M_{3,j}$ intervient nécessairement après le début de la période $T_{20,j}$. La durée entre les instants $tu_j$ et $M_{3,j}$ est ici appelée durée DT2. Ces durées DT1 et DT2 sont calculables à partir de l'instant $tu_j$ et des mesures des instants $M_{1,j}$ et $M_{3,j}$.

Les instants $M_{1,j}$ et $M_{4,j}$ sont mesurés par l'émetteur-récepteur 20. Les instants $M_{2,j}$ et $M_{3,j}$ sont mesurés par l'émetteur-récepteur 22.

Dans la partie haute de la figure 4, un axe temporel 150 représente les instants $M_{1,j}$ et $M_{4,j}$ mesuré par l'émetteur-récepteur 20. Un axe temporel 152 représente les instants $M_{2,j}$ et $M_{3,j}$ mesurés par l'émetteur-récepteur 22. Une flèche relie les instants $M_{1,j}$ et $M_{2,j}$, respectivement, d'émission et de réception de la première trame d'informations. Une autre flèche relie les instants $M_{3,j}$ et $M_{4,j}$, respectivement, d'émission et de réception de la seconde trame d'informations. Les durées DT1 et DT2 sont représentées sur la figure 4 pour la période $T_{20,j}$. Enfin, un axe temporel 154 représente les instants $to_j$ auxquels les distance $dc_j$ sont délivrées par le sous-module 61 puis acquises par le sous-module 62. Sur la figure 4, les périodes $T_{20,j-1}$ à $T_{20,j+1}$ ainsi que les instants $tu_{j-1}$ à $tu_{j+2}$ de début et de fin de chacune de ces périodes sont représentées.

Puisque l'instant $M_{3,j}$ est mesuré par l'émetteur-récepteur 22, il ne peut pas être transmis à l'émetteur-récepteur 20 dans la seconde trame d'informations émise à cet instant. Ici, les instants $M_{2,j}$ et $M_{3,j}$ mesurés par l'émetteur-récepteur 22 sont transmis à l'émetteur-récepteur 20 dans la seconde trame d'informations transmise au cours de la période suivante $T_{20,j+1}$. A cause de cela, l'instant $to_j$ auquel le sous-module 61 délivre la distance $dc_j$ intervient, non pas dans la période $T_{20,j}$, mais dans la période suivante $T_{20,j+1}$. Il existe donc un retard de plusieurs dizaines de millisecondes entre les instants $M_{1,j}$, $M_{2,j}$, $M_{3,j}$ et $M_{4,j}$ utilisés pour calculer la distance $dc_j$ et l'instant où cette distance $dc_j$ est disponible pour être traitée par le sous-module 62. Or, à un instant $t_m$, le sous-module 62 calcule l'innovation $Y_m$ à partir de l'écart entre la dernière distance $dc_m$ acquise et une estimation $z_m$ de cette distance construite à partir de la dernière position estimée $P_e(m)$. Si l'on suppose que l'instant $t_m$ est égal à l'instant $t_{k+9}$ de la figure 4, alors la dernière distance $dc_m$ est

égale à la distance $dc_j$. La dernière position acquise est la position $P_e(k+9)$. Comme illustré sur la figure 4 par des flèches en pointillées qui pointent vers le sous-module 62, cette distance $dc_j$ et cette position $P_e(k+9)$ sont transmises au sous-module 62 pour qu'il calcule à partir de ces mesures le nouveau vecteur d'état $X_{m|m}$. Si aucune correction n'est apportée, l'innovation $Y_m$ calculée par le sous-module 62 est égale à l'écart entre la distance mesurée $dc_j$ et la distance estimée $\hat{z}_{k+9}$. La distance $dc_j$ correspond à la distance entre les émetteurs-récepteurs 20, 22 telle qu'elle était pendant la période $T_{20,j}$ alors que la distance estimée $\hat{z}_{k+9}$ correspond à la distance entre les émetteurs-récepteurs 20, 22 telle qu'elle était à l'instant $t_{k+9}$, c'est-à-dire pendant la période $T_{20,j+1}$. Autrement dit, l'innovation compare une distance telle qu'elle était pendant la période $T_{20,j}$ à une estimation de la distance telle qu'elle est dans la période suivante $T_{20,j+1}$. Or, lorsque le véhicule 2 se déplace rapidement, la distance entre les émetteurs-récepteurs 20, 22 varie de plusieurs dizaines de centimètres entre la période $T_{20,j}$ et la période $T_{20,j+1}$. Ainsi, cela introduit une erreur dans le calcul de l'innovation $Y_m$ qui dégrade la précision de la localisation du véhicule. Par la suite, cette erreur est appelée "retard de mesure" car elle provient du fait que la mesure de la distance s'écoule sur une durée assez longue. Comme décrit en détail par la suite, dans ce procédé, la distance $dc_j$ est corrigée pour compenser ce retard de mesure.

En parallèle de l'étape 148, lors d'une étape 160, pendant chaque période $T_{20,j}$, le sous-module 61 acquière une position $P_j$ et une vitesse $V_j$ représentative de la position et de la vitesse du véhicule 2 pendant cette période $T_{20,j}$. Cette position $P_j$ et cette vitesse $V_j$ sont temporairement mémorisées pour être utilisées lors de la période $T_{20,j+1}$ suivante. Par exemple, ici, au début de chaque période $T_{20,j}$, le sous-module 61 acquière la position $P_e(k)$ et la vitesse $V_e(k)$ délivrées par le sous-module 60 à l'instant $t_k$ qui suit immédiatement l'instant $tu_j$. Cette position $P_e(k)$ et cette vitesse $V_e(k)$ sont ensuite mémorisées en tant que, respectivement, position $P_j$ et vitesse $V_j$.

Lorsque l'émetteur-récepteur 20 a mesuré les instants $M_{1,j}$ et $M_{4,j}$ et reçu les mesures $M_{2,j}$ et $M_{3,j}$, lors d'une étape 162, l'émetteur-récepteur 20 transmet ces mesures au sous-module 61.

En réponse, lors d'une étape 164, le sous-module 61 calcule une distance brute $db_j$ uniquement à partir des instants d'émission et de réception mesurés pendant la période $T_{20,j}$. Ici, la distance $db_j$ est calculée à l'aide de la relation (8) suivante :

$$db_j = c \cdot \frac{\left(M_{4,j} - M_{3,j}\right) + \left(M_{2,j} - M_{1,j}\right)}{2}$$

où le symbole "c" désigne la vitesse de la lumière. Par la suite, sauf indication contraire, le symbole "." dans une relation mathématique désigne l'opération arithmétique de multiplication.

Lors d'une étape 166, le sous-module 61 corrige la distance brute $db_j$ pour obtenir une distance corrigée $dc_j$. Dans cet exemple de réalisation, l'étape 166 comporte :

- une opération 168 de correction du déplacement du véhicule 2 pendant les durées DT1 et DT2 pour obtenir une mesure de la distance à l'instant $tu_j$, et
- une opération 170 de correction du retard de mesure.

Lors de l'opération 168, le sous-module 61 corrige la distance $db_j$ pour tenir compte du fait que le véhicule 2 se déplace entre les instants $tu_j$ et $M_{4,j}$ et ainsi obtenir une distance $dp_j$ entre les émetteurs-récepteurs 20, 22 à l'instant $tu_j$ plus précise. Pour cela, dans ce mode de réalisation, la vitesse de déplacement du véhicule 2 est considérée comme constante sur toute la période $T_{20,j}$. Dans ces conditions, la distance $dp_j$ est calculée à l'aide de la relation suivante : $dp_j = db_j + \delta d_1$, où $\delta d_1 = -v_{a1} \cdot (DT2 + DT1)/2$, où $v_{a1}$ est la vitesse apparente de déplacement du véhicule 2 en direction de l'émetteur-récepteur 22. L'amplitude de la vitesse $v_{a1}$ est égale à la norme de la projection orthogonale d'une vitesse $V_{j1}$ du véhicule 2 sur l'axe qui passe par le centre géométrique des antennes des émetteurs-récepteurs 20, 22. La vitesse $V_{j1}$ est une vitesse représentative de la vitesse du véhicule 2 pendant l'intervalle $[tu_j; M_{4,j}]$. Ici, la vitesse $V_{j1}$ est choisie égale à la vitesse $V_j$ mémorisée lors de l'étape 160. La vitesse $v_{a1}$ est un nombre qui est positif lorsque le véhicule 2 se rapproche de l'émetteur-récepteur 22 et qui est négatif lorsqu'il s'éloigne de cet émetteur-récepteur 22.

Ici, la vitesse $v_{a1}$ est calculée à l'aide de la relation suivante : $v_{a1} = -v_j \cdot u_{bv}$, où :

- le symbole "." désigne l'opération produit scalaire,
- $V_j$ est le vitesse mémorisée pour la période $T_{20,j}$ lors de l'étape 160, et
- $u_{bv}$ est un vecteur directeur qui pointe du centre géométrique de l'antenne de l'émetteur-récepteur 22 vers le centre géométrique de l'antenne de l'émetteur-récepteur 20.

Les coordonnées de ce vecteur $u_{bv}$ sont données par la relation suivante :

$$u_{bv} = \frac{\begin{bmatrix} x_j - B_x & y_j - B_y & z_j - B_z \end{bmatrix}^T}{\left\| \begin{bmatrix} x_j - B_x & y_j - B_y & z_j - B_z \end{bmatrix} \right\|}$$

où :

- $x_j$, $y_j$ et $z_j$ sont les coordonnées de la position $P_j$ du véhicule mémorisée pendant la période $T_{20,j}$ lors de l'étape 160, et
- $B_x$, $B_y$, $B_z$ sont les coordonnées de la position de l'émetteur-récepteur 22.

Lors de l'opération 170, le sous-module 61 corrige la distance $dp_j$ pour que celle-ci soit aussi proche que possible de la distance entre les émetteurs-récepteurs 20, 22 à l'instant $t_m$. Ainsi, pour reprendre l'exemple de la figure 4, le sous-module corrige la distance $dp_j$ pour que celle-ci soit proche de la distance entre les émetteurs-récepteurs 20, 22 à l'instant $t_{k+9}$. A cet effet, le sous-module 61 ajoute à la distance $dp_j$ un terme correctif $\delta d_0$ qui correspond à la distance que le véhicule 2 a parcouru en direction de l'émetteur-récepteur 22 pendant l'intervalle de temps $[tu_j, t_m]$. Ainsi, la distance corrigée est calculée à l'aide de la relation suivante : $dc_j = dp_j - \delta d_0$. Le terme $\delta d_0$ est calculé à l'aide de la relation suivante : $\delta d_0 = v_{a0}.DT0$, où :

- $DT0$ est égal à la durée écoulée entre les instants $tu_j$ et $t_m$,
- $v_{a0}$ est une vitesse apparente de déplacement du véhicule 2 en direction de l'émetteur-récepteur 22.

La vitesse $v_{a0}$ est définie comme la vitesse $v_{a1}$, c'est-à-dire que son amplitude est égale à norme de la projection orthogonale d'une vitesse $V_{j0}$ du véhicule 2 sur l'axe qui passe par le centre géométrique des antennes des émetteurs-récepteurs 20, 22. La vitesse $V_{j0}$ est une vitesse représentative de la vitesse du véhicule 2 pendant l'intervalle $[tu_j; t_m]$. La vitesse $v_{a0}$ est un nombre qui est positif lorsque le véhicule 2 se rapproche de l'émetteur-récepteur 22 et qui est négatif lorsqu'il s'éloigne de cet émetteur-récepteur 22. Ici, pour simplifier les calculs, la vitesse $v_{a0}$ est prise égale à la vitesse $v_{a1}$.

Ici, la durée $DT0$ est une constante pré-enregistrée dans la mémoire 54 ou calculée à partir des instants $tu_j$ et $t_m$. En effet, ici, les horloges déclenchant les instants $t_k$ et $tu_j$ sont synchronisées. Par exemple, pour cela, le système 30 utilise la même horloge pour générer les instants $t_k$ et $tu_j$.

C'est cette distance $dc_j$ qui est acquise par le sous-module 62 à l'instant $to_j$.

Ensuite, seulement si l'instant $t_k$ est en plus un instant $tg_i$ où une mesure de l'unité 40 est acquise, après l'étape 136, le calculateur 50 exécute une étape 170 de mise à jour des coefficients de correction en fonction de la nouvelle mesure de l'unité 40. Lors de cette étape 170 la mise à jour des coefficients de correction est réalisée sans utiliser les instants d'émission et de réception obtenus par l'émetteur-récepteur 20.

Seulement si l'instant $t_k$ est un instant $to_j$ où une distance corrigée $dc_j$ est acquise, après l'étape 136, le calculateur 50 exécute une étape 180 de mise à jour des coefficients de correction en fonction de la nouvelle distance corrigée $dc_j$. Lors de cette étape 180 la mise à jour des coefficients de correction est réalisée sans utiliser la mesure de l'unité 40.

Si l'instant $t_k$ ne correspond ni à un instant $tg_i$ ni à un instant $to_j$, alors la position $P_e(k)$, l'orientation $O_e(k)$ et à la vitesse $V_e(k)$ estimées par le sous-module 60 et non corrigé par le sous-module 62 sont délivrées sur la sortie 37. Ainsi aux instants $t_k$ situés entre les instants $t_m$, c'est la position $P_e(k)$, l'orientation $O_e(k)$ et la vitesse $V_e(k)$ qui sont délivrées sur la sortie 37. De plus, le procédé retourne à l'étape 136 sans exécuter ni l'étape 170 ni l'étape 180. Dans ce cas, la précédente position, la précédente orientation et de la précédente vitesse utilisées lors de la prochaine itération de l'étape 136 sont égales, respectivement, à la position $P_e(k)$, l'orientation $O_e(k)$ et à la vitesse $V_e(k)$.

Lors de l'étape 180, le sous-module 62 commence par acquérir, lors d'une opération 201, la nouvelle distance corrigée $dc_j$.

Ensuite, lors d'une opération 202, le bloc 68 est exécuté par le calculateur 50 pour obtenir le vecteur d'état prédit $X_{m|m-1}$ à partir de la précédente estimation $X_{m-1|m-1}$ de ce vecteur d'état. La précédente estimation $X_{m-1|m-1}$ est celle obtenue au précédent instant $t_{m-1}$. Le précédent instant $t_{m-1}$ correspond soit à un instant $tg_i$ soit à l'instant $to_{j-1}$. Dès lors la précédente estimation $X_{m-1|m-1}$ est celle qui a été construite soit lors de la précédente exécution de l'étape 170 soit lors de la précédente exécution de l'étape 180. La prédiction $X_{m|m-1}$ du vecteur d'état est construite en mettant en oeuvre la relation (1). Dans ce cas particulier où le filtre 64 est un "error-state Kalman filter", la prédiction $X_{m|m-1}$ est systématiquement nulle.

Lors de l'opération 202, le bloc 68 construit aussi la prédiction $P_{m|m-1}$ de la matrice de covariance $P_m$ à l'instant $t_m$ en mettant en oeuvre la relation (2).

Lors d'une opération 206, le bloc 70 construit l'estimation $\hat{z}_m$ de la distance entre les émetteurs-récepteurs 20, 22 en mettant en oeuvre la relation (3). Dans ce mode de réalisation, lors de l'opération 206, le bloc 70 calcule aussi la matrice d'observation $H_m$. La matrice $H_m$ est, par exemple, calculée en dérivant la relation (3) par rapport à chacun des différents paramètres du vecteur d'état $X_{m|m}$.

Lors de l'opération suivante 208, le bloc 70 met à jour les coefficients de correction. Pour cela, il corrige la prédiction $X_{m|m-1}$ en fonction de l'écart $Y_m$ entre la distance corrigée $dc_j$ et son estimation $\hat{z}_m$. A cet effet, le bloc 70 calcule l'écart $Y_m$ selon la relation (4). Ensuite, le gain $K_m$ est calculé à l'aide de la relation (5). Le vecteur d'état corrigé $X_{m|m}$ est alors obtenu en mettant en oeuvre la relation (6).

Lors de l'opération 208, le bloc 70 obtient également la matrice $P_{m|m}$ de covariance mise à jour à l'aide de la relation (7).

A l'issue des étapes 170 et 180, lors d'une étape 210, le sous-module 62 corrige la position $P_e(m)$, l'orientation $O_e(m)$ et la vitesse $V_e(m)$ pour obtenir la position corrigée $P_c(m)$, l'orientation corrigée $O_c(m)$ et la vitesse corrigée $V_c(m)$.

Pour cela, l'additionneur 66 ajoute les coefficients de correction contenus dans le vecteur $X_{m|m}$ aux coordonnées correspondantes de la position $P_e(m)$, de l'orientation $O_e(m)$ et de la vitesse $V_e(m)$, construite lors de la dernière exécution de l'opération 136, pour obtenir la position $P_e(m)$, l'orientation $O_c(m)$ et la vitesse $V_c(m)$. Ainsi, uniquement aux instants $t_m$, ce sont la position $P_e(m)$, l'orientation $O_c(m)$ et la vitesse $V_e(m)$ qui sont délivrées sur la sortie 37 et non pas la position $P_e(m)$, l'orientation $O_e(m)$ et la vitesse $V_e(m)$. De plus, lors de l'étape 210, la position $P(k)$, l'orientation $O(k)$ et la vitesse $V(k)$ sont transmises au sous-module 60 et utilisées par le sous-module 60 comme précédente position, précédente orientation et précédente vitesse du véhicule 2 lors de la prochaine itération de l'étape 136.

Après l'étape 210, le procédé retourne à l'étape 136.

Chapitre II : Variantes

Variantes de la détermination de la distance :

D'autres méthodes de mesure de la distance brute $db_j$ à partir des instants d'émission et de réception de trames d'informations entre les émetteurs-récepteurs 20 et 22 peuvent être implémentées. Par exemple, en variante, la méthode de mesure de la distance aller-retour est remplacée par une méthode de mesure de distance avec deux allers et un retour connue sous le terme anglais de « three-way ranging ». Dans cette méthode « three-way ranging », chaque échange de trames d'informations entre les émetteurs-récepteurs 20 et 22 comporte, en plus de l'émission des première et seconde trames d'informations, l'émission par l'émetteur-récepteur 20, en réponse à la réception de la seconde trame d'informations, d'une troisième trame d'informations à un instant $M_{5,j}$ et la réception de cette troisième trame d'informations par l'émetteur-récepteur 22 à un instant $M_{6,j}$. Dans ce cas, la distance brute $db_j$ est calculée à l'aide de la relation suivante :

$$db_j = c \cdot \frac{1}{2+\varepsilon^{AB}}\left(\left(M_{3,j}-M_{2,j}\right)+\left(1+\varepsilon^{AB}\right)\left(M_{4,j}-M_{1,j}\right)\right)$$

où $\varepsilon^{AB}$ est défini par la relation suivante :

$$\varepsilon^{AB} = \frac{\left(M_{6,j}-M_{2,j}\right)}{\Delta T} - 1$$

où $\Delta T$ est égale à $M_{5,j}$ - $M_{1,j}$.

En variante, le calcul de la distance brute $db_j$ prend en compte la dérive de l'horloge située dans l'émetteur-récepteur 20 par rapport à l'horloge située dans l'émetteur-récepteur 22. Ces horloges sont utilisées pour mesurer les instants d'émission et de réception des trames d'informations. Pour cela, par exemple, la distance brute $db_j$ est calculée à l'aide de la relation suivante :

$$db_j = c \cdot \frac{\left(M_{4,j}-M_{1,j}\right)-\left(M_{3,j}-M_{2,j}\right)\left(1+\varepsilon_{drift,j}\right)}{2}$$

où $\varepsilon_{drift,j}$ est défini par la relation suivante :

$$\varepsilon_{drift,j} = \frac{\Delta T_{remote,j} - \Delta T_{local,j}}{\Delta T_{remote,j}}$$

où $\Delta T_{remote,j} = M_{2,j} - M_{2,j-1}$ et $\Delta T_{local,j} = M_{1,j} - M_{1,j-1}$.

Les mesures des instants $M_{2,j}$ et $M_{3,j}$ peuvent être transmises à l'émetteur-récepteur 20 par d'autres moyens que la seconde trame d'informations émise au cours de la période $T_{20,j+1}$. Par exemple, ces instants $M_{2,j}$ et $M_{3,j}$ sont transmis à l'émetteur-récepteur 20 par l'intermédiaire d'une trame supplémentaire d'informations dont les instants d'émission et de réception ne sont pas utilisés pour le calcul de la distance $db_j$. Par exemple, cette trame supplémentaire d'informations est transmise à un instant $M_{5,j}$ et reçue par l'émetteur-récepteur 20 à un instant $M_{6,j}$. Les instants $M_{5,j}$ et $M_{6,j}$ sont alors typiquement compris entre les instants $M_{4,j}$ et $tu_{j+1}$. Dans ce cas, l'instant $to_j$ est plus proche de l'instant $tu_j$ que dans les modes de réalisation précédents. Par exemple, l'instant $to_j$ se situe alors vers la fin de la période $T_{20,j}$. Toutefois, même dans ce cas, il existe un retard de mesure qu'il est intéressant de corriger. Dans un autre mode de réalisation, cette trame supplémentaire est transmise par l'intermédiaire d'une liaison de transmission d'information établie à l'aide d'émetteurs-récepteurs indépendants des émetteurs-récepteurs 20 et 22.

En variante, les émetteurs-récepteurs 20 et 22 sont capables de réaliser une mesure grossière et une mesure fine des instants de réception. Dans ce cas, cette possibilité peut être mise à profit, par exemple, selon le schéma suivant. La technologie UWB utilise un indicateur connu sous l'acronyme FPI (« First Path Index »). Cet indicateur est construit par les émetteurs-récepteurs 20, 22. Cet indicateur doit normalement être compris entre des limites hautes $L_H$ et basses Le. Lorsque cet indicateur est entre les limites $L_H$ et $L_B$, c'est la mesure fine qui est utilisée. À l'inverse, si cet indicateur n'est pas compris entre ces limites $L_H$ et $L_B$, c'est la valeur grossière qui est utilisée.

Les rôles des émetteurs-récepteurs 20 et 22 peuvent être inversés. Dans ce cas, c'est l'émetteur-récepteur 22 qui émet la première trame d'informations à l'instant $M_{1,j}$ et, en réponse à la réception de cette première trame d'informations, l'émetteur-récepteur 20 émet la second trame d'informations à l'instant $M_{3,j}$. Dans ce mode de réalisation, les instants $M_{2,j}$ et $M_{3,j}$ sont mesurés par l'émetteur-récepteur 20 et les instants $M_{1,j}$ et $M_{4,j}$ sont mesurés par l'émetteur-récepteur 22. L'émetteur-récepteur 22 transmet les instants $M_{1,j}$ et $M_{4,j}$ mesurés à l'émetteur-récepteur 20, par exemple, dans la première trame d'informations transmise à l'instant $M_{1,j+1}$.

En variante, les coordonnées $B_x$, $B_y$ et $B_z$ de la position de l'émetteur-récepteur fixe 22 sont contenues dans une trame d'informations, par exemple la seconde trame d'informations, transmise de l'émetteur-récepteur 22 vers l'émetteur-récepteur 20. Dans ce cas, ces coordonnées n'ont pas besoin d'être enregistrées au préalable dans la mémoire 54.

D'autres méthodes de calcul de la vitesse apparente $v_{a0}$ sont possibles. Par exemple, en variante, la vitesse $V_{j0}$ utilisée pour calculer la vitesse $v_{a0}$ est égale à la moyenne des vitesses $V_e(k)$ relevées par le sous-module 61 pendant toute la période $T_{20,j}$. Pour cela, par exemple, lors de l'étape 160, le sous-module 61 relève chacune des vitesses $V_e(k)$ pendant toute la période $T_{20,j}$ puis calcule une vitesse moyenne à partir de ces vitesses $V_e(k)$. La vitesse $V_{j0}$ mémorisée est égale à cette vitesse moyenne. De façon similaire, la position $P_j$ peut être prise égale à une moyenne des positions $P_e(k)$ relevées pendant la période $T_{20,j}$. Dans un autre mode de réalisation, la vitesse $V_{j0}$ est prise égale à la vitesse $V_e(k)$ relevé à l'instant $t_k$ le plus proche du milieu de la période $T_{20,j}$.

Les variantes du paragraphe précédent peuvent être adaptées au calcul de la vitesse $v_{a1}$. Dans ce cas, la vitesse moyenne est, de préférence, calculée en prenant en compte seulement les vitesses $V_e(k)$ relevées pendant l'intervalle $[tu_j, M_{4,j}]$. De même, la position moyenne prise en compte pour le calcul de la vitesse $v_{a1}$ est une position moyenne sur l'intervalle $[tu_j, M_{4,j}]$. Cet exemple, montre aussi qu'il n'est pas nécessaire que les vitesses apparentes $v_{a0}$ et $v_{a1}$ soient identiques.

Dans un mode de réalisation simplifié, l'opération 168 de correction du déplacement du véhicule 2 pendant les durées DT1 et DT2 est omise. C'est notamment le cas lorsque les durées DT1 et DT2 sont très petites.

Dans un autre mode de réalisation, le terme correctif $\delta d_1$ est soustrait à la distance $db_j$ et non pas ajouté. Dans ce cas, la distance $dp_j$ obtenue correspond à la distance entre les émetteurs-récepteurs 20, 22 à l'instant $M_{4,j}$ et non pas à l'instant $tu_j$. Dès lors, lors de l'opération 170, la durée DT0 est prise égale à la durée de l'intervalle $[M_{4,j}; t_m]$. Cette variante est fonctionnellement identique à ce qui a été décrit dans le chapitre I car la somme $\delta d_1 + \delta d_0$ des termes correctifs calculés selon cette variante est égale à la somme des termes correctifs calculés selon le procédé décrit dans le chapitre I.

Variantes du filtre de Kalman :

De nombreux autres modes de réalisation du filtre 64 sont possibles. Par exemple, le filtre 64 peut être un filtre de Kalman linéaire, un filtre de Kalman étendu ou EKF (« Extended Kalman Filter »), un filtre UKF (« Unscented Kalman Filter ») ou encore un filtre de Kalman adaptatif.

De nombreuses variantes des relations mises en oeuvre dans le filtre de Kalman existent. En effet, ces relations dépendent du repère dans lequel la position, l'orientation et la vitesse du véhicule sont exprimées. Or d'autres repères sont utilisables à la place du repère $R_T$. Par exemple, on peut citer le repère ECI (Earth Centered Inertial). Le repère ECI n'est pas fixe par rapport à la surface de la terre puisque la terre tourne dans ce repère. Le repère $R_T$ peut aussi être un repère fixe par rapport aux étoiles. Lorsqu'un autre repère est utilisé, il est possible, par un simple changement de repère, de revenir dans la situation décrite ici.

Les relations du filtre de Kalman peuvent aussi contenir une matrice de rotation supplémentaire pour tenir compte du fait que les axes de mesure de l'unité 42 ne sont pas alignés sur les axes du repère $R_b$.

De même, de nombreuses variantes du vecteur d'état $X_{m|m}$ sont possibles. Par exemple, le vecteur d'état $X_{m|m}$ peut aussi ne pas comporter de coefficient de correction des biais de l'accéléromètre 44 et du gyromètre 46. Le vecteur d'état $X_{m|m}$ peut aussi comporter des variables d'état supplémentaires.

Dans un autre mode de réalisation, la distance corrigée est ajoutée au vecteur d'état du filtre de Kalman et les matrices d'état et d'observation sont modifiées en conséquence. Toutefois, un tel mode de réalisation impose alors d'exécuter le filtre de Kalman à chaque instant $t_k$ ce qui n'est pas toujours souhaitable.

Ce qui a été précédemment enseigné dans le cas particulier où le sous-module 62 de correction utilise un ou plusieurs filtres de Kalman s'applique aussi à des sous-modules de correction qui construisent les coefficients de correction en utilisant d'autres estimateurs que des filtres de Kalman. De façon générale, ce qui a été décrit ici s'applique à tout sous-module de correction configuré pour mettre à jour les coefficients de correction en utilisant un écart entre :

- une mesure d'une grandeur physique construite à partir de la distance corrigée $dc_j$, et
- une estimation de cette grandeur physique construite à partir des mesures de l'unité 42 ou d'un autre capteur distinct de l'émetteur-récepteur 20.

D'autres modes de réalisation du sous-module 62 sont possibles. Par exemple, en variante, le sous-module 62 est agencé comme décrit dans l'architecture connue sous le nom anglais de « tight coupling ». Cette architecture est décrite plus en détail dans le chapitre 4.1.2 de la thèse Godha2006.

Variantes du procédé :

La position du véhicule 2 peut être déterminée à partir des mesures d'une ou plusieurs autres unités de mesure que l'unité 42 de mesure inertielle. Par exemple, ces unités de mesure sont choisies dans le groupe constitué :

- de l'unité 40 de géolocalisation par satellite,
- de l'unité 42 de mesure inertielle,
- d'un odomètre,
- d'un magnétomètre associé à une cartographie des champs magnétiques terrestres.

Par exemple, dans un mode de réalisation, l'unité 42 est remplacée par l'unité 40 de géolocalisation par satellite. La position $P_e(k)$ et la vitesse $V_e(k)$ sont alors les mesures de la position et de la vitesse du véhicule 2 délivrées par cette unité 40 aux instants $tg_i$. Dans un tel mode de réalisation, le sous-module 62 de correction corrige la position $P_e(k)$ et la vitesse $V_e(k)$ uniquement à partir de la distance $dc_j$ délivrée par le sous-module 61. La durée DT0 est alors prise égale à la durée de l'intervalle entre l'instant $tu_j$ et le dernier instant $tg_i$ auquel l'unité 40 a délivré une estimation de la position et de la vitesse du véhicule. Dans un autre mode de réalisation, c'est une combinaison de plusieurs capteurs qui délivre, à chaque instant $t_k$, la position $P_e(k)$ et la vitesse $V_e(k)$. Par exemple, cette combinaison de capteurs comporte un odomètre qui permet d'estimer la vitesse du véhicule 2 et un magnétomètre triaxe qui permet d'estimer l'orientation du véhicule 2. A partir de ces deux capteurs, il est aussi possible de délivrer une position $P_e(k)$ et une vitesse $V_e(k)$. D'autres combinaisons de capteurs sont possibles. Ainsi, ce qui a été décrit peut aussi être mis en oeuvre dans un système de localisation dans lequel les unités 40 et 42 sont remplacées par un ou plusieurs autres capteurs à partir desquels la position et la vitesse du véhicule 2 peuvent être déterminées.

En variante, le système 30 est équipé de capteurs supplémentaires, comme par exemple un magnétomètre, un baromètre, un altimètre ou un odomètre. Dans ce cas, le sous-module 62 de correction est modifié pour prendre en compte les mesures de ces capteurs supplémentaires pour corriger les estimations brutes délivrées par le sous-module 60 d'intégration.

Dans un autre mode de réalisation, l'unité 40 de géolocalisation par satellite est omise. Dans ce cas, par exemple, les coefficients de correction sont mis à jour uniquement à partir des distances corrigées $dc_j$.

Si le déplacement du véhicule 2 est contraint, alors certaines mesures selon certains axes de mesure peuvent être omises. Par exemple, si le véhicule 2 est contraint de se déplacer dans un plan horizontal, les mesures selon l'axe $Z_T$ peuvent être omises.

Variantes du système de localisation :

En variante, les émetteurs-récepteurs 20, 22 ne sont pas des émetteurs-récepteurs UWB. Par exemple, les émetteurs-récepteurs 20, 22 sont remplacés par des émetteurs-récepteurs radio qui utilisent un spectre de fréquences beaucoup plus étroit pour échanger les trames d'informations.

En variante, le système de localisation du véhicule 2 comporte un seul émetteur-récepteur fixe ou, au contraire plusieurs émetteurs-récepteurs fixes. Dans le cas où le système comporte plusieurs émetteurs-récepteurs fixes, ceux-ci sont de préférence répartis à intervalle régulier le long de la trajectoire ou le long d'une portion de cette trajectoire. Dans ce dernier cas, si l'émetteur-récepteur mobile 20 peut simultanément communiquer avec plusieurs émetteurs-récepteurs fixes, alors au lieu de fournir à un instant $to_j$ une seule distance corrigée, le sous-module 61 fournit simultanément plusieurs distances corrigées, chacune de ces distances correspondant à une distance entre l'émetteur-récepteur 20 et un émetteur-récepteur fixe respectif. Ensuite, le sous-module 62 corrige l'estimation de la position en prenant en compte ces différentes distances et les positions connues des différents émetteurs-récepteurs fixes. Dans un tel cas, avantageusement, la première trame d'informations émise par l'émetteur-récepteur 20 est commune à l'ensemble des émetteurs-récepteurs fixes.

En variante, le calculateur électronique 50 n'est pas logé à l'intérieur du véhicule 2 mais ailleurs. Par exemple, le calculateur électronique 50 est logé à l'intérieur d'une borne fixe qui contient déjà l'émetteur-récepteur 22.

La synchronisation temporelle entre les instants $tu_j$ et $t_k$ peut être obtenue par d'autres moyens. Par exemple, en variante, un signal de déclenchement commun est envoyé à l'émetteur-récepteur 20 et à l'unité 42 pour déclencher la réalisation des mesures au même instant.

Autres variantes :

Le véhicule 2 n'est pas nécessairement un véhicule automobile. Ce qui a été décrit s'applique à tout véhicule capable de se déplacer le long d'une trajectoire équipée d'émetteurs-récepteurs fixes. Par exemple, le véhicule 2 peut aussi être un véhicule ferroviaire ou un bateau.

En variante, le véhicule 2 ne comporte pas de moyens 34 de propulsion embarqués dans le véhicule 2. C'est par exemple le cas lorsque le véhicule 2 est une télécabine tractée par un câble.

De même, le poste 38 de pilotage peut être déporté et situé en dehors du véhicule 2. C'est le cas lorsque le véhicule 2 est un véhicule télécommandé ou une télécabine.

Dans un mode de réalisation simplifié, le système 30 ne délivre pas, sur la sortie 37, la position ou la vitesse ou l'orientation du véhicule 2. Par exemple, dans un mode de réalisation très simplifié, seule la distance $dc_j$ qui sépare le véhicule 2 de l'émetteur-récepteur 22 est délivrée sur la sortie 37. Toutefois, même dans un mode de réalisation aussi simplifié, la position et la vitesse du véhicule 2 sont déterminées pour apporter les différentes corrections précédemment décrites.

Chapitre III : Avantages des modes de réalisations décrits

Le fait d'ajouter le terme correctif $\delta d_0$ à la distance brute $db_j$ permet d'obtenir une distance corrigée $dc_j$ qui prend en compte le fait que le véhicule 2 s'est déplacé entre les instants $tu_j$ et $t_m$. Ainsi, la distance $dc_j$ diminue l'amplitude du retard de mesure. L'innovation $Y_m$ calculée est alors plus exacte ce qui permet d'obtenir une localisation du véhicule plus précise.

Le fait d'ajouter le terme correctif $\delta d_1$ à la distance brute $db_j$ permet d'obtenir une distance corrigée $dc_j$ qui compense en plus le fait que le véhicule 2 s'est déplacé entre les instants $tu_j$ et $M_{4,j}$. Cela permet d'obtenir une localisation du véhicule plus précise.

L'utilisation d'émetteurs-récepteurs UWB permet d'obtenir une localisation du véhicule 2 plus précise.

**Revendications**

1. Procédé de localisation d'un véhicule, ce procédé comportant les étapes suivantes :

   a) à un instant $tu_j$, le déclenchement (148) d'un échange de signaux radio entre un émetteur-récepteur mobile fixé sur le véhicule et un émetteur-récepteur fixe situé le long d'une trajectoire du véhicule, puis

   b) une fois que cet échange de signaux radio est terminé, le calcul (164), par un calculateur électronique, d'une distance brute seulement à partir des instants d'émission et de réception des signaux radio échangés lors de cet échange,

   c) la localisation du véhicule par le calculateur électronique, cette localisation comportant :

- la construction (140) d'une position estimée du véhicule à un instant $t_m$ à partir d'une mesure réalisée à l'aide d'une unité de mesure indépendante et distincte des émetteurs-récepteurs fixe et mobile et sans utiliser la distance brute calculée, l'instant $t_m$ étant postérieur à l'instant $tu_j$, puis
- la correction (210) de la position du véhicule en fonction d'un écart entre :

   - une distance entre les émetteurs-récepteurs fixe et mobile calculée à partir des instants d'émission ou de réception des signaux radio échangés lors de l'échange déclenché à l'instant $tu_j$, et
   - la distance entre la position estimée du véhicule à l'instant $t_m$ et la position de l'émetteur-récepteur fixe,

**caractérisé en ce que** le procédé comporte une étape (166) de correction de la distance brute calculée lors de l'étape b) pour obtenir une distance corrigée puis, lors de l'étape c), c'est cette distance corrigée qui est utilisée pour corriger la position du véhicule, cette étape (166) de correction de la distance brute comportant :

   - le calcul d'une vitesse apparente de déplacement du véhicule en direction de l'émetteur-récepteur fixe, l'amplitude de cette vitesse apparente étant égale à la norme de la projection orthogonale d'une vitesse du véhicule entre les instants $tu_j$ et $t_m$ sur un axe qui passe par le centre géométrique des antennes des émetteurs-récepteurs mobile et fixe, puis
   - l'ajout (170) à la distance brute calculée, d'un premier terme correctif $\delta d_0$ calculé à l'aide de la relation suivante : $\delta d_0 = v_{a0}.DT0$, où :

      - DT0 est égal à la durée écoulée entre les instants $tu_j$ et $t_m$,
      - $v_{a0}$ est la vitesse apparente calculée, et
      - le symbole "." désigne la multiplication arithmétique.

2. Procédé selon la revendication 1, dans lequel :

   - l'échange de signaux radio, déclenché à l'instant $tu_j$, commence par l'émission d'une première trame d'informations et se termine par l'émission d'une dernière trame d'informations dont les instants d'émission et de réception sont mesurés puis utilisés lors de l'étape b) pour calculer la distance brute,
   - l'étape (166) de correction de la distance brute comporte également l'ajout (168) à la distance brute calculée, d'un deuxième terme correctif $\delta d_1$ calculé à l'aide de la relation suivante : $\delta d_1 = -v_{a1}.(DT2+DT1)/2$, où :
   - $v_{a1}$ est une vitesse apparente de déplacement du véhicule en direction de l'émetteur-récepteur fixe, l'amplitude de cette vitesse apparente $v_{a1}$ étant égale à la norme de la projection orthogonale d'une vitesse du véhicule entre les instants $tu_j$ et $t_m$ sur un axe qui passe par le centre géométrique des antennes des émetteurs-récepteurs mobile et fixe,
   - DT1 est égal à la durée écoulée entre l'instant $tu_j$ et l'instant d'émission de la première trame d'informations,
   - DT2 est égal à la durée écoulée entre l'instant $tu_j$ et l'instant d'émission de la dernière trame d'informations.

3. Procédé selon l'une quelconque des revendications précédentes, dans lequel les signaux radio sont des signaux ultra large bande.

4. Procédé selon l'une quelconque des revendications précédentes, dans lequel :

   - l'étape a) est répétée à chaque instant $tu_j$ d'une suite ordonnée temporellement d'instants $\{0, t_1, t_2, ..., tu_{j-1}, tu_j, ...\}$, chaque répétition de l'étape a) étant suivie d'une répétition de l'étape b),
   - la construction d'une position estimée est répétée pour chaque instant $t_k$ d'une suite ordonnée temporellement d'instants $\{0, t_1, t_2, ..., t_{k-1}, t_k, ...\}$, la fréquence des instants $t_k$ étant supérieure à la fréquence des instants $tu_j$ de sorte que plusieurs instants $t_k$ sont intercalés entre les instants $tu_j$ et $tu_{j+1}$ immédiatement consécutifs, l'instant $t_m$ étant l'instant de cette suite d'instants $\{0, t_1, t_2, ..., t_{k-1}, t_k, ...\}$ qui précède immédiatement l'exécution de la correction de la position du véhicule.

5. Procédé selon l'une quelconque des revendications précédentes, dans lequel la construction d'une position estimée comporte :

   - l'acquisition, par le calculateur électronique, d'une mesure de l'accélération et de la vitesse angulaire du véhicule à l'instant $t_m$ réalisée par une unité de navigation inertielle,
   - la construction (140), par un module d'intégration de mesures inertielles, de la position estimée du véhicule à partir d'une précédente position du véhicule et en utilisant les mesures de l'accélération et de la vitesse angulaire acquises à l'instant $t_m$.

6. Support (54) d'enregistrement d'informations, **caractérisé en ce qu'**il comporte des instructions non-transitoires, exécutables par un calculateur électronique, pour l'exécution d'un procédé de localisation d'un véhicule conforme à l'une quelconque des revendications précédentes, lorsque les instructions sont exécutées par ce calculateur électronique.

7. Système de localisation d'un véhicule, ce système comportant :

    - un émetteur-récepteur mobile (20) fixé sur le véhicule apte à échanger des signaux radio avec un émetteur-récepteur fixe situé le long d'une trajectoire du véhicule, et
    - un calculateur électronique (50) configuré pour exécuter les étapes suivantes :

        a) à un instant $tu_j$, le déclenchement d'un échange de signaux radio entre l'émetteur-récepteur mobile fixé sur le véhicule et l'émetteur-récepteur fixe situé le long d'une trajectoire du véhicule, puis
        b) une fois que cet échange de signaux radio est terminé, le calcul, par le calculateur électronique, d'une distance brute seulement à partir des instants d'émission et de réception des signaux radio échangés lors de cet échange,
        c) la localisation du véhicule par le calculateur électronique, cette localisation comportant :

            - la construction d'une position estimée du véhicule à un instant $t_m$ à partir d'une mesure réalisée à l'aide d'une unité de mesure indépendante et distincte des émetteurs-récepteurs fixe et mobile et sans utiliser la distance brute calculée, l'instant $t_m$ étant postérieur à l'instant $tu_j$, puis
            - la correction de la position du véhicule en fonction d'un écart entre :

                - une distance entre les émetteurs-récepteurs fixe et mobile calculée à partir des instants d'émission ou de réception des signaux radio échangés lors de l'échange déclenché à l'instant $tu_j$, et
                - la distance entre la position estimée du véhicule à l'instant $t_m$ et la position de l'émetteur-récepteur fixe,

    **caractérisé en ce que** le calculateur électronique (50) est également configuré pour exécuter une étape de correction de la distance brute calculée lors de l'étape b) pour obtenir une distance corrigée puis, lors de l'étape c), c'est cette distance corrigée qui est utilisée pour corriger la position du véhicule, cette étape de correction de la distance brute comportant :

        - le calcul d'une vitesse apparente de déplacement du véhicule en direction de l'émetteur-récepteur fixe, l'amplitude de cette vitesse apparente étant égale à la norme de la projection orthogonale d'une vitesse du véhicule entre les instants $tu_j$ et $t_m$ sur un axe qui passe par le centre géométrique des antennes des émetteurs-récepteurs mobile et fixe, puis
        - l'ajout (170) à la distance brute calculée, d'un premier terme correctif $\delta d_0$ calculé à l'aide de la relation suivante : $\delta d_0 = v_{a0}.DT0$, où :

            - DT0 est égal à la durée écoulée entre les instants $tu_j$ et $t_m$,
            - $v_{a0}$ est la vitesse apparente calculée, et
            - le symbole "." désigne la multiplication arithmétique.

**Patentansprüche**

1. Verfahren zur Lokalisierung eines Fahrzeugs, wobei dieses Verfahren die folgenden Schritte umfasst:

    a) zu einem Zeitpunkt $tu_j$, Auslösen (148) eines Austausches von Funksignalen zwischen einem mobilen Sendeempfänger, der an dem Fahrzeug befestigt ist, und einem stationären Sendeempfänger, der sich entlang einer Bahn des Fahrzeugs befindet, dann
    b) nach Beendigung dieses Austausches von Funksignalen, Berechnen (164), durch eine elektronische Recheneinheit, eines Grobabstands nur auf Grundlage der Sende- und Empfangszeitpunkte der während dieses Austausches ausgetauschten Funksignale,
    c) Lokalisieren des Fahrzeugs durch die elektronische Recheneinheit, wobei dieses Lokalisieren Folgendes umfasst:

- Ermitteln (140) einer geschätzten Position des Fahrzeugs zu einem Zeitpunkt $t_m$ anhand einer Messung, die mit Hilfe einer unabhängigen und von dem stationären und dem mobilen Sendeempfänger verschiedenen Messeinheit durchgeführt wird, ohne dabei den berechneten Grobabstand zu verwenden, wobei der Zeitpunkt $t_m$ nach dem Zeitpunkt $tu_j$ liegt, dann
- Korrigieren (210) der Position des Fahrzeugs in Abhängigkeit von einer Abweichung zwischen:
- einem Abstand zwischen dem stationären und dem mobilen Sendeempfänger, der anhand der Sende- oder Empfangszeitpunkte der Funksignale, die während des zu dem Zeitpunkt $tu_j$ ausgelösten Austausches ausgetauscht werden, berechnet wird, und
- dem Abstand zwischen der geschätzten Position des Fahrzeugs zu dem Zeitpunkt $t_m$ und der Position des stationären Sendeempfängers,

**dadurch gekennzeichnet, dass** das Verfahren einen Schritt (166) des Korrigierens des während des Schritts b) berechneten Grobabstands umfasst, um einen korrigierten Abstand zu erhalten, wobei es dann während des Schritts c) dieser korrigierte Abstand ist, der dazu verwendet wird, die Position des Fahrzeugs zu korrigieren, wobei dieser Schritt (166) des Korrigierens des Grobabstands Folgendes umfasst:

- Berechnen einer scheinbaren Bewegungsgeschwindigkeit des Fahrzeugs in Richtung des stationären Sendeempfängers, wobei die Größe dieser scheinbaren Geschwindigkeit gleich der Norm der orthogonalen Projektion einer Geschwindigkeit des Fahrzeugs zwischen den Zeitpunkten $tu_j$ und $t_m$ auf eine Achse ist, die durch den geometrischen Mittelpunkt der Antennen des mobilen und des stationären Sendeempfängers verläuft, dann
- Hinzufügen (170), zu dem berechneten Grobabstand, eines ersten Korrekturterms $\delta d_0$, der mit Hilfe der folgenden Gleichung berechnet wird: $\delta d_0 = v_{a0}.DT0$, wobei:
- DT0 gleich dem zwischen den Zeitpunkten $tu_j$ und $t_m$ verstrichenen Zeitraum ist,
- $v_{a0}$ die berechnete scheinbare Geschwindigkeit ist und
- das Symbol "." die arithmetische Multiplikation bezeichnet.

2. Verfahren nach Anspruch 1, wobei:

- der Austausch von Funksignalen, der zu dem Zeitpunkt $tu_j$ ausgelöst wird, mit dem Senden eines ersten Informationsrahmens beginnt und mit dem Senden eines letzten Informationsrahmen endet, wobei die Sende- und Empfangszeitpunkte gemessen und dann während des Schritts b) zur Berechnung des Grobabstands verwendet werden,
- der Schritt (166) des Korrigierens des Grobabstands ferner das Hinzufügen (168), zu dem berechneten Grobabstand, eines zweiten Korrekturterms $\delta d_1$ umfasst, der mit Hilfe der folgenden Gleichung berechnet wird: $\delta d_1 = -v_{a1}.(DT2+DT1)/2$, wobei:
- $v_{a1}$ eine scheinbare Bewegungsgeschwindigkeit des Fahrzeugs in Richtung des stationären Sendeempfängers ist, wobei die Größe dieser scheinbaren Geschwindigkeit $v_{a1}$ gleich der Norm der orthogonalen Projektion einer Geschwindigkeit des Fahrzeugs zwischen den Zeitpunkten $tu_j$ und $t_m$ auf eine Achse ist, die durch den geometrischen Mittelpunkt der Antennen des mobilen und des stationären Sendeempfängers verläuft,
- DT1 gleich dem zwischen dem Zeitpunkt $tu_j$ und dem Zeitpunkt des Sendens des ersten Informationsrahmens verstrichenen Zeitraum ist,
- DT2 gleich dem zwischen dem Zeitpunkt $tu_j$ und dem Zeitpunkt des Sendens des letzten Informationsrahmens verstrichenen Zeitraum ist.

3. Verfahren nach einem beliebigen der vorhergehenden Ansprüche, wobei die Funksignale Ultrabreitbandsignale sind.

4. Verfahren nach einem beliebigen der vorhergehenden Ansprüche, wobei:

- der Schritt a) zu jedem Zeitpunkt $tu_j$ einer zeitlich geordneten Folge von Zeitpunkten $\{0, t_1, t_2, ..., tu_{j-1}, tu_j, ...\}$ wiederholt wird, wobei auf jede Wiederholung des Schritts a) eine Wiederholung des Schritts b) folgt,
- das Ermitteln einer geschätzten Position für jeden Zeitpunkt $t_k$ einer zeitlich geordneten Folge von Zeitpunkten $\{0, t_1, t_2, ..., t_{k-1}, t_k, ...\}$ wiederholt wird, wobei die Frequenz der Zeitpunkte $t_k$ größer als die Frequenz der Zeitpunkte $tu_j$ ist, sodass mehrere Zeitpunkte $t_k$ zwischen die unmittelbar aufeinanderfolgenden Zeitpunkte $tu_j$ und $tu_{j+1}$ eingefügt sind, wobei der Zeitpunkt $t_m$ der Zeitpunkt dieser Folge von Zeitpunkten $\{0, t_1, t_2, ..., t_{k-1}, t_k, ...\}$ ist, der der Ausführung der Korrektur der Position des Fahrzeugs unmittelbar vorausgeht.

5. Verfahren nach einem beliebigen der vorhergehenden Ansprüche, wobei das Ermitteln einer geschätzten Position Folgendes umfasst:

- Erfassen, durch die elektronische Recheneinheit, einer Messung der Beschleunigung und der Winkelgeschwindigkeit des Fahrzeugs zu dem Zeitpunkt $t_m$, durchgeführt durch eine Trägheitsnavigationseinheit,
- Ermitteln (140), durch ein Modul zur Integration von Inertialmessungen, der geschätzten Position des Fahrzeugs anhand einer vorherigen Position des Fahrzeugs und unter Verwendung der zu dem Zeitpunkt $t_m$ erfassten Messungen der Beschleunigung und der Winkelgeschwindigkeit.

6. Medium (54) zur Aufzeichnung von Informationen, **dadurch gekennzeichnet, dass** es nicht transitorische Anweisungen umfasst, die von einer elektronischen Recheneinheit ausgeführt werden können, zur Ausführung eines Verfahrens zur Lokalisierung eines Fahrzeugs gemäß einem beliebigen der vorhergehenden Ansprüche, wenn die Anweisungen durch diese elektronische Recheneinheit ausgeführt werden.

7. System zur Lokalisierung eines Fahrzeugs, wobei dieses System Folgendes umfasst:

- einen mobilen Sendeempfänger (20), der an dem Fahrzeug befestigt ist und dazu fähig ist, Funksignale mit einem stationären Sendeempfänger auszutauschen, der sich entlang einer Bahn des Fahrzeugs befindet, und
- eine elektronische Recheneinheit (50), die dazu konfiguriert ist, die folgenden Schritte auszuführen:

a) zu einem Zeitpunkt $tu_j$, Auslösen eines Austausches von Funksignalen zwischen dem mobilen Sendeempfänger, der an dem Fahrzeug befestigt ist, und dem stationären Sendeempfänger, der sich entlang einer Bahn des Fahrzeugs befindet, dann
b) nach Beendigung dieses Austausches von Funksignalen, Berechnen, durch die elektronische Recheneinheit, eines Grobabstands nur auf Grundlage der Sende- und Empfangszeitpunkte der während dieses Austausches ausgetauschten Funksignale,
c) Lokalisieren des Fahrzeugs durch die elektronische Recheneinheit, wobei dieses Lokalisieren Folgendes umfasst:

- Ermitteln einer geschätzten Position des Fahrzeugs zu einem Zeitpunkt $t_m$ anhand einer Messung, die mit Hilfe einer unabhängigen und von dem stationären und dem mobilen Sendeempfänger verschiedenen Messeinheit durchgeführt wird, ohne dabei den berechneten Grobabstand zu verwenden, wobei der Zeitpunkt $t_m$ nach dem Zeitpunkt $tu_j$ liegt, dann
- Korrigieren der Position des Fahrzeugs in Abhängigkeit von einer Abweichung zwischen:
- einem Abstand zwischen dem stationären und dem mobilen Sendeempfänger, der anhand der Sende- oder Empfangszeitpunkte der Funksignale, die während des zu dem Zeitpunkt $tu_j$ ausgelösten Austausches ausgetauscht werden, berechnet wird, und
- dem Abstand zwischen der geschätzten Position des Fahrzeugs zu dem Zeitpunkt $t_m$ und der Position des stationären Sendeempfängers,

**dadurch gekennzeichnet, dass** die elektronische Recheneinheit (50) ferner dazu konfiguriert ist, einen Schritt des Korrigierens des während des Schritts b) berechneten Grobabstands auszuführen, um einen korrigierten Abstand zu erhalten, wobei es dann während des Schritts c) dieser korrigierte Abstand ist, der dazu verwendet wird, die Position des Fahrzeugs zu korrigieren, wobei dieser Schritt des Korrigierens des Grobabstands Folgendes umfasst:

- Berechnen einer scheinbaren Bewegungsgeschwindigkeit des Fahrzeugs in Richtung des stationären Sendeempfängers, wobei die Größe dieser scheinbaren Geschwindigkeit gleich der Norm der orthogonalen Projektion einer Geschwindigkeit des Fahrzeugs zwischen den Zeitpunkten $tu_j$ und $t_m$ auf eine Achse ist, die durch den geometrischen Mittelpunkt der Antennen des mobilen und des stationären Sendeempfängers verläuft, dann
- Hinzufügen (170), zu dem berechneten Grobabstand, eines ersten Korrekturterms $\delta d_0$, der mit Hilfe der folgenden Gleichung berechnet wird: $\delta d_0 = v_{a0} . DT0$, wobei:

- DT0 gleich dem zwischen den Zeitpunkten $tu_j$ und $t_m$ verstrichenen Zeitraum ist,
- $v_{a0}$ die berechnete scheinbare Geschwindigkeit ist und
- das Symbol "." die arithmetische Multiplikation bezeichnet.

**Claims**

1. Method for locating a vehicle, said method comprising the following steps:

    a) triggering, at an instant $tu_j$, an exchange of radio signals between a mobile transceiver fixed to the vehicle and a fixed transceiver located along a path of the vehicle; then
    b) once this exchange of radio signals is complete, an electronic computer computing a rough distance only from the transmission and reception instants of the radio signals exchanged during this exchange;
    (c) the electronic computer locating the vehicle, with this locating comprising:

    - constructing an estimated position of the vehicle at an instant $t_m$ from a measurement carried out using a measurement unit independent and separate from the fixed and mobile transceivers and without using the computed rough distance, with the instant $t_m$ being subsequent to the instant $tu_j$; then
    - correcting the position of the vehicle as a function of a difference between:

        - a distance between the fixed and mobile transceivers computed from the transmission or reception instants of the radio signals exchanged during the exchange triggered at the instant $tu_j$; and
        - the distance between the estimated position of the vehicle at the instant $t_m$ and the position of the fixed transceiver,

    wherein the method comprises a step of correcting the rough distance computed during step b) in order to obtain a corrected distance, then, during step c), it is this corrected distance that is used to correct the position of the vehicle, with this step of correcting the rough distance comprising:

    - computing an apparent movement velocity of the vehicle towards the fixed transceiver, with the amplitude of this apparent velocity being equal to the norm of the orthogonal projection of a velocity of the vehicle between the instants $tu_j$ and $t_m$ onto an axis that passes through the geometric centre of the antennae of the mobile and fixed transceivers; then
    - adding a first corrective term $\delta d_0$ to the computed rough distance, which first corrective term is computed using the following relation: $\delta d_0 = v_{a0}.DT0$, where:

        - DT0 is equal to the elapsed time between the instants $tu_j$ and $t_m$;
        - $v_{a0}$ is the computed apparent velocity; and
        - the "." symbol denotes arithmetic multiplication.

2. Method according to Claim 1, wherein:

    - the exchange of radio signals, triggered at the instant $tu_j$, starts with the transmission of a first frame of information and ends with the transmission of a last frame of inform - ation, the transmission and reception instants of which are measured and then used during step b) to compute the rough distance;
    - the step of correcting the rough distance also comprises adding a second corrective term $\delta d$, to the computed rough distance, which second corrective term is computed using the following relation: $\delta d_1 = -v_{a1}.(DT2+DT1)/2$, where:
    - $v_{a1}$ is an apparent movement velocity of the vehicle towards the fixed transceiver, with the amplitude of this apparent velocity $v_{a1}$ being equal to the norm of the orthogonal projection of a velocity of the vehicle between the instants $tu_j$ and $t_m$ onto an axis that passes through the geometric centre of the antennae of the mobile and fixed transceivers;
    - DT1 is equal to the elapsed time between the instant $tu_j$ and the transmission instant of the first frame of information;
    - DT2 is equal to the elapsed time between the instant $tu_j$ and the transmission instant of the last frame of information.

3. Method according to anyone of the preceding claims, wherein the radio signals are ultra-wide band signals.

4. Method according to anyone of the preceding claims, wherein:

    - step a) is repeated at each instant $tu_j$ of a temporally ordered sequence of instants $\{0, t_1, t_2, ..., tu_{j-1}, tu_j, ...\}$, with each repetition of step a) being followed by a repetition of step b);

- the construction of an estimated position is repeated for each instant $t_k$ of a temporally ordered sequence of instants $\{0, t_1, t_2, ..., t_{k-1}, t_k, ...\}$, with the frequency of the instants $t_k$ being higher than the frequency of the instants $tu_j$, such that several instants $t_k$ are interposed between the immediately consecutive instants $tu_j$ and $tu_{j+1}$, with the instant $t_m$ being the instant of this sequence of instants $\{0, t_1, t_2, ..., t_{k-1}, t_k, ...\}$ that immediately precedes the execution of the correction of the position of the vehicle.

5. Method according to anyone of the preceding claims, wherein constructing an estimated position comprises:

- the electronic computer acquiring a measurement of the acceleration and of the angular velocity of the vehicle at the instant $t_m$ that is carried out by an inertial navigation unit;
- an inertial measurement integration module constructing the estimated position of the vehicle from a previous position of the vehicle and using the measurements of the acceleration and of the angular velocity acquired at the instant $t_m$.

6. Information storage medium (54), wherein the medium comprises non-transitory instructions, executable by an electronic computer, for executing a method for locating a vehicle according to any one of the preceding claims, when the instructions are executed by this electronic computer.

7. System for locating a vehicle, said system comprising:

- a mobile transceiver (20) fixed to the vehicle that is capable of exchanging radio signals with a fixed transceiver located along a path of the vehicle; and
- an electronic computer (50) configured to execute the following steps:

a) triggering, at an instant $tu_j$, an exchange of radio signals between the mobile transceiver fixed to the vehicle and the fixed transceiver located along a path of the vehicle; then
b) once this exchange of radio signals is complete, the electronic computer computing a rough distance only from the transmission and reception instants of the radio signals exchanged during this exchange;
(c) the electronic computer locating the vehicle, with this locating comprising:

- constructing an estimated position of the vehicle at an instant $t_m$ from a measurement carried out using a measurement unit independent and separate from the fixed and mobile transceivers and without using the computed rough distance, with the instant $t_m$ being subsequent to the instant $tu_j$; then
- correcting the position of the vehicle as a function of a difference between:

- a distance between the fixed and mobile transceivers computed from the transmission or reception instants of the radio signals exchanged during the exchange triggered at the instant $tu_j$; and
- the distance between the estimated position of the vehicle at the instant $t_m$ and the position of the fixed transceiver,

**characterized in that** the electronic computer is also configured to execute a step of correcting the rough distance computed during step b) in order to obtain a corrected distance, then, during step c), it is this corrected distance that is used to correct the position of the vehicle, with this step of correcting the rough distance comprising:

- computing an apparent movement velocity of the vehicle towards the fixed transceiver, with the amplitude of this apparent velocity being equal to the norm of the orthogonal projection of a velocity of the vehicle between the instants $tu_j$ and $t_m$ onto an axis that passes through the geometric centre of the antennae of the mobile and fixed transceivers; then
- adding a first corrective term $\delta d_0$ to the computed rough distance, which first corrective term is computed using the following relation: $\delta d_0 = v_{a0}.DT0$, where:

- DT0 is equal to the elapsed time between the instants $tu_j$ and $t_m$;
- $v_{a0}$ is the computed apparent velocity; and
- the "." symbol denotes arithmetic multiplication.

Fig. 1

Fig. 2

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 112349143 A
- CN 109946730 A
- GB 2551861 A
- WO 2020063979 A1

**Littérature non-brevet citée dans la description**

- **V. DI PIETRA et al.** Loosely Coupled GNSS and UWB with INS Intégration for Indoor/Outdoor Pedestrian Navigation. *Sensors,* 05 Novembre 2020
- **MONICA N. et al.** Hybrid GNSS/INS/UWB Positioning for Live Demonstration Assisted Driving. *2019 IEEE Intelligent Transportation Systems Conférence (ITSC),* 27 Novembre 2019
- **NAVARRO MONICA et al.** Hybrid GNSS/INS/UWB Positionning for Live Dermonstration Assisted Driving. *2019 IEEE Intelligent Transportation Systems Conférence,* 27 Octobre 2019, 3294-3301
- **SIRORENKO JURI et al.** Error corrections for Ultrawidedbande ranging. *IEEE Transaction on instrucmentation and measurement,* 21 Mai 2019, vol. 69 (11), 9037-9047
- **S. GODHA.** Performance Evaluation of Low Cost MEMS-Based IMU Integrated With GPS for Land Vehicle Navigation Application". *PhD report,* 2006